# EUROPÄISCHE PATENTSCHRIFT

(11) **EP 1 755 049 B1**
(45) Veröffentlichungstag und Bekanntmachung des Hinweises auf die Patenterteilung: **20.05.2009**
(21) Anmeldenummer: 05025837.5
(22) Anmeldetag: 26.11.2005
(51) Int. Cl.: G06F 17/30, H04L 29/08

(54) **Verfahren zur Übermittlung von Informationen von einem Informationsserver an einen Client**
Method for transmission of information from an information server to a client
Procédée der transmission d'information d'un serveur d'information à un client

(30) Priorität: 18.08.2005 EP 05017921
(43) Veröffentlichungstag der Anmeldung: 21.02.2007
(73) Patentinhaber: HURRA Communications GmbH, 70599 Stuttgart (DE)
(72) Erfinder: Schweier, René, 70599 Stuttgart (DE)
(74) Vertreter: Wörz, Volker Alfred

(56) Entgegenhaltungen:
- WO-A-01/18684
- WO-A-02/17205
- WO-A-20/05054982
- US-A1- 2001 037 415
- US-A1- 2002 098 832
- US-A1- 2005 165 615

## Beschreibung

Die Erfindung betrifft ein Verfahren zur Übermittlung von Informationen von einem ersten Informationsserver an einen Client, wobei
- der erste Informationsserver und der Client mit einem Kommunikationsnetzwerk verbunden sind;
- dem Client ein Profil zugeordnet wird;
- mindestens ein Zusatzinformationsserver mit dem Kommunikationsnetzwerk verbunden ist;
- durch den Zusatzinformationsserver mindestens eine Zusatzinformation zum Abruf bereitstellt wird;
- mittels des Client von dem ersten Informationsserver eine Netzwerkseite über das Kommunikationsnetzwerk angefordert wird;
- in Abhängigkeit von dem dem Client zugeordneten Profil eine Zusatzinformation ausgewählt wird; und
- die angeforderte erste Netzwerkseite und die Zusatzinformation an den Client übermittelt werden.

Die Erfindung betrifft auch ein Client-Server-System umfassend einen einem Benutzer zugeordneten Client, einen ersten Informationsserver, einen Zusatzinformationsserver und ein Kommunikationsnetzwerk, mittels dessen eine Kommunikation zwischen dem Client und dem ersten Informationsserver möglich ist, wobei
- das Client-Server-System Mittel zur Zuordnung eines Profils zu dem Client aufweist,
- der Zusatzinformationsserver mit dem Kommunikationsnetzwerk verbunden ist;
- der Zusatzinformationsserver mindestens eine Zusatzinformation zum Abruf bereitstellt;
- der Client Mittel aufweist, um von dem ersten Informationsserver eine erste Netzwerkseite über das Kommunikationsnetzwerk anzufordern;
- das Client-Server-System Mittel aufweist, um eine Zusatzinformation in Abhängigkeit von dem dem Client zugeordneten Profil auszuwählen; und
- das Client-Server-System Mittel aufweist, um die angeforderte erste Netzwerkseite mit der Zusatzinformation von dem ersten Server an den Client zu übermitteln.

Die Erfindung betrifft auch einen Profilserver in einem Client-Server-System, wobei
- das Client-Server-System einen einem Benutzer zugeordneten Client, einen ersten Informationsserver, einen Zusatzinformationsserver und ein Kommunikationsnetzwerk umfasst;
- der Profilserver Mittel zur Zuordnung eines Profils zu dem Client aufweist;
- der Zusatzinformationsserver mit dem Kommunikationsnetzwerk verbunden ist;
- der Zusatzinformationsserver mindestens eine Zusatzinformation zum Abruf bereitstellt;
- der Client Mittel aufweist, um von dem ersten Informationsserver eine erste Netzwerkseite über das Kommunikationsnetzwerk anzufordern;
- das Client-Server-System Mittel aufweist, um eine Zusatzinformation in Abhängigkeit von dem dem Client zugeordneten Profil auszuwählen;
- und das Client-Server-System Mittel aufweist, um die angeforderte erste Netzwerkseite mit der Zusatzinformation von dem ersten Server an den Client zu übermitteln.

Die Erfindung betrifft schließlich auch ein Computerprogramm, das auf einem Client-Server-System, insbesondere auf einem Client und/oder einem Server, ablauffähig ist.

Eine Vielzahl von Clients und Servern kommuniziert mittels des Internets. Diese bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem (zumindest virtuellen) Verzeichnis und einem der Netzwerkseite, beispielsweise einem sogenannten HTML-Dokument, zugeordneten Namen zusammengesetzt. Eine URL erlaubt es, die dieser URL zugeordnete Netzwerkseite von einem Client aus anzuwählen. Dazu gibt ein Benutzer beispielsweise mittels einer Tastatur die URL in einem speziellen Eingabefeld eines auf dem Client ablaufenden Computerprogramms, eines sogenannten Browsers, ein. Der Client generiert daraufhin eine Anfrage an den entsprechenden Server, der wiederum die angeforderte Netzwerkseite an den Client übermittelt. Dort wird die übermittelte Netzwerkseite mittels des Browsers interpretiert und über ein dem Client zugeordnetes Display dem Benutzer darstellt.

Zur Beschreibung des Inhalts einer Netzwerkseite wird eine Seitenbeschreibungssprache verwendet. Heutzutage wird dazu überwiegend die standardisierte Seitenbeschreibungssprache HTML (Hypertext Mark-up Language) eingesetzt. HTML erlaubt es, auf einfache Weise den Inhalt und das Aussehen einer Netzwerkseite in einem sogenannten HTML-Dokument zu beschreiben. Fordert beispielsweise ein Client Informationen von einem Server an, so übermittelt der Server ein die angeforderten Informationen enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument dem Browser zugeführt.

Eine URL kann statt einer Netzwerkseite auch einem ausführbaren Computerprogramm auf dem Server zugeordnet sein. Ein derartiges Computerprogramm ist beispielsweise ein sogenanntes perl-script. Ein perl-script ist eine in der Programmiersprache perl codierte Abfolge von Anweisungen. Ruft ein Client eine URL auf, die einem derartigen Computerprogramm zugeordnet ist, so wird dieses Computerprogramm auf dem Server ausgeführt. Die Ausführung des Computerprogramms kann auch eine Übermittlung von Informationen an den Client, beispielsweise in der Form einer Netzwerkseite, vorsehen. Insbesondere kann hierbei mittels des Computerprogramms auch eine automatische Erzeugung einer Netzwerkseite veranlasst werden. Die automatische Erzeugung kann die Auswahl des Inhalts und die Auswahl von Parametern bezüglich des Layouts umfassen. Selbstverständlich kann das Computerprogramm auch in einer anderen Sprache, insbesondere in einer anderen Script-Sprache, beispielsweise als java-script, realisiert sein.

In einem HTML-Dokument ist es möglich, URLs weiterer Netzwerkseiten beziehungsweise HTML-Dokumente anzugeben. Derartige URLs werden als Verweis oder als Link bezeichnet. Ein Link ist ein aktivierbarer Verweis. Werden Links mittels eines Browsers einem Benutzer dargestellt, so hat der Benutzer die Möglichkeit, einen dargestellten Link anzuwählen bzw. zu aktivieren und sich die der angewählten URL entsprechende Netzwerkseite anzeigen zu lassen. Dabei ist es insbesondere möglich, dass sich die angewählte Netzwerkseite auf einem anderen Server befindet.

Ein Informationsserver kann beispielsweise jeder sogenannte Web-Server sein. Ein Web-Server ist ein Server, der in dem WWW Informationen zum Abruf bereithält. Ein Informationsserver ist beispielsweise auch ein Server, der aktuelle Nachrichten bereithält. Derartige Server werden beispielsweise von den Anbietern großer Tageszeitungen oder Wochenzeitschriften betrieben.

Damit ist jede Komponente innerhalb eines Kommunikationsnetzwerks, bzw. jede Komponente, die mit einem Kommunikationsnetzwerk verbunden ist, ein Server, wenn sie Daten zum Abruf bereithält. Insbesondere wenn derartige Daten zur Darstellung für einen Benutzer vorgesehen sind, wird der Server als Informationsserver bezeichnet. Das Bereithalten zum Abruf bedeutet jedoch nicht zwingend, dass die Informationen gezielt abgerufen werden sollen. Es ist insbesondere im Bereich des WWW üblich, dass Informationen von einem Server an einen Client übermittelt werden, obwohl der Client genau diese Informationen nicht angefordert hat. Derartige Informationen betreffen beispielsweise Werbung, die von dem Informationsserver an den Client übermittelt wird.

Selbst bei dem unaufgeforderten Übermitteln von Informationen an einen Client, wie es beispielsweise bei der Übermittlung von unerwünschten emails, sogenanntem Spam, der Fall ist, muss der mail-server als Informationsserver angesehen werden.

Auch ein sogenannter Online-Shop ist ein Informationsserver, da von dem Online-Shop Informationen, beispielsweise Informationen bezüglich der von dem Online-Shop zum Kauf angebotenen Produkte, angefordert werden können. Dies zeigt, dass der Funktionsumfang eines Informationsservers nicht auf das reine Übermitteln von Informationen beschränkt ist. Hier liegt vielmehr die in der Informationstechnik bekannte Sichtweise des Client-Server-Prinzips zugrunde, bei dem jede Komponente, die einen Dienst zur Verfügung stellt, als Server bezeichnet wird und jede Komponente, die einen Dienst anfordert, als Client bezeichnet wird. Insbesondere kann hierbei folglich jede Komponente sowohl als Client und als Server fungieren. Dabei kann selbstverständlich eine Hardware-Komponente, also beispielsweise ein Computer, die Funktionalitäten mehrerer Clients und mehrerer Server gleichzeitig oder nahezu gleichzeitig realisieren, indem diese Funktionalitäten teilweise auch in Software realisiert sind.

Ein Informationsserver wird insbesondere auch in Form einer sogenannten Suchmaschine realisiert. Eine Suchmaschine ist ein mit dem Kommunikationsnetzwerk verbundener Server und insbesondere Informationsserver, an den der Benutzer mittels des Client eine Anfrage in Form eines Suchbegriffes sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen (das Suchergebnis) mittels einer Netzwerkseite an den Client übermittelt werden. Dazu wird häufig in Abhängigkeit von den ermittelten Informationen automatisiert ein HTML-Dokument dynamisch durch den Server erzeugt, das schließlich an den Client übermittelt und dem Benutzer mittels des Browsers angezeigt wird.

Häufig werden auf den von einer Suchmaschine in Abhängigkeit einer Anforderung von Informationen erzeugten Netzwerkseiten Zusatzinformationen, beispielsweise in Form sogenannter Werbebanner, dargestellt. Die Zusatzinformation kann von dem Informationsserver selbst oder von einem Zusatzinformationsserver eines speziellen Dienstleisters über das Kommunikationsnetzwerk zur Verfügung gestellt werden. Es ist bekannt, dass die Auswahl der Zusatzinformation in Abhängigkeit von dem eingegebenen Suchbegriff erfolgt.

Die Zusatzinformation kann jede Art von Information sein, die an den Client übermittelt wird, jedoch von einem Client nicht explizit von einem Informationsserver angefordert wurde. Hierbei kann der Informationsserver selbstverständlich gleichzeitig die Funktionalität des Zusatzinformationsservers aufweisen. Eine Trennung dieser Begriffe dient - wie im Bereich der Informationsverarbeitung üblich - in erste Linie zur Darstellung der unterschiedlichen Funktionalitäten und nicht zur Bestimmung einer konkreten Komponente, die diese Funktionalität realisiert.

Eine Zusatzinformation kann mit einem Link versehen sein. Eine Aktivierung des Links durch den Client bzw. durch einen Benutzer, dem der Client zugeordnet ist, kann dann die Anforderung einer anderen von dem ersten Informationsserver bereitgestellten Netzwerkseite bewirken.

Die Zusatzinformation kann auch mit einem Link derart versehen sein, dass eine Aktivierung des Links die Ausführung eines auf dem ersten Informationsserver abgelegten Computerprogramms, beispielsweise eines Skripts, bewirkt. Ein derartiges Skript kann beispielsweise als Perl-Skript realisiert sein.

Die Übermittlung der Zusatzinformation zusammen mit der Netzwerkseite von dem ersten Informationsserver an den Client kann auch die Übermittlung eines Skripts, beispielsweise eines sogenannten Java-Skripts bewirken. Eine Aktivierung des Links führt dann zu einer Ausführung des Skripts auf dem Client.

In Abhängigkeit von der Ausführung des Skripts können weitere Aktionen ausgeführt werden. Beispielsweise können auf dem Informationsserver statistische Daten bezüglich des Abrufens einer bestimmten Netzwerkseite erhoben werden oder es können weitere Netzwerkseiten durch den Client angefordert bzw. an diesen übermittelt werden.

Übermittelt der Informationsserver eine Netzwerkseite an den Client, so kann der Informationsserver ferner ein sogenanntes Cookie an den Client übermitteln. Ein Cookie ist ein Menge von Informationen, die in einem dem Client zugeordneten Speicherbereich abgespeichert wird. Man spricht hier auch vom "Setzen eines Cookies". Es kann vorgesehen sein, dass automatisch ein Cookie gesetzt wird, wenn der Client einen auf einer Netzwerkseite dargestellten Link aktiviert. Fordert der Client erneut eine Netzwerkseite von dem Informationsserver an, so kann ferner vorgesehen sein, dass das Cookie zusammen mit der Anforderung von dem Client an den Informationsserver übermittelt wird. Ein Cookie ist üblicherweise derart realisiert, dass es nur an den Informationsserver zurückgeschickt werden kann, der den Client zum Setzen des Cookies veranlasst hat.

In einem Cookie können insbesondere auch Profilinformation abgespeichert werden, also beispielsweise wie häufig ein Benutzer, dem der Client zugeordnet ist, eine bestimmte Netzwerkseite aufruft oder wann er die Netzwerkseite zuletzt aufgerufen hat.

Es ist bekannt, die von einem Informationsserver bereitgestellten Netzwerkseiten zu klassifizieren. Dies kann beispielsweise anhand des thematischen Inhalts der Netzwerkseite erfolgen. Profile können dann dahingehend erstellt werden, dass eine Aussage darüber getroffen werden kann, für welche Themen sich ein Benutzer besonders interessiert.

Üblicherweise kann ein Profil sowohl ein individuelles, ausschließlich einem bestimmten Benutzer zugeordnetes Benutzerprofil, als auch ein Merkmal oder mehrere Merkmale bezeichnen, die eine Klassifizierung des Benutzers bezüglich bestimmter, vorgebbarer Merkmale ermöglichen. Insbesondere kann das Profil selbst eine dem Benutzer zugeordnete Klasse bezeichnen. Das dem Client zugeordnete Profil kann insofern insbesondere das dem Benutzer zugeordnete Profil stets dann bezeichnen, wenn der Benutzer bei dem Client, beispielsweise einem Personal Computer, einem PDA oder einem mobiles Telekommunikationsgerät, angemeldet ist und der Client in Verbindung mit dem Kommunikationsnetzwerk steht. Hierbei kann dann das dem Benutzer zugeordnete Profil stets auch als dem Client zugeordnet betrachtet werden und umgekehrt, sofern sich nicht aus dem Kontext heraus etwas anderes ergibt.

Druckschritt US 2005/0165615 (Minar) zeigt ein solches Verfahren zur Einbettung von Werbung in Netzwerkseiten.

Ist der Informationsserver als eine Suchmaschine ausgebildet, so kann das Profil des Benutzers in Abhängigkeit der von diesem eingegebenen Suchbegriffe erfolgen. Durch eine Auswertung des Profils kann der Informationsserver veranlassen, dass dem Benutzer bzw. dem dem Benutzer zugeordneten Client nur derartige Zusatzinformationen übermittelt werden, die seinem Profil entsprechen. Dabei können beispielsweise die Zusatzinformationen entsprechend klassifiziert sein.

Mittels einer derartigen Auswahl von Zusatzinformationen ist es möglich, die Relevanz der dem Benutzer übermittelten Zusatzinformationen zu erhöhen. Damit kann einerseits eine Verringerung der Menge der über das Kommunikationsnetzwerk zu übertragenden Daten erreicht werden. Andererseits kann eine Schonung der Rechenleistung des Informationsservers erreicht werden.

Beispielsweise handelt es sich bei dem Informationsserver um eine Produktsuchmaschine, bei der ein Benutzer typischerweise in Abhängigkeit von unterschiedlichen Kriterien ein oder mehrere Produkte sucht. Die unterschiedlichen Kriterien wie Preisspanne, Hersteller, Produktart, etc. können mittels Suchbegriffen eingegeben werden. Die Produktsuchmaschine wertet die Suchbegriffe aus und übermittelt eine Ergebnisliste an den dem Benutzer zugeordneten Client. Zusätzlich kann die Produktsuchmaschine eine Zusatzinformation übermitteln. Die Zusatzinformation kann beispielsweise ähnliche Produkte beschreiben, thematisch verwandte Sonderangebote darstellen, Vergleiche mit ähnlichen Produkten darstellen oder Zubehör anbieten. Zeigt das Benutzerprofil, dass der Benutzer zu einem früheren Zeitpunkt nach Gesundheitsprodukten gesucht hat, kann daraus geschlossen werden, dass der Benutzer auf seine Gesundheit achtet. Zusammen mit nun gesuchten Produkten können dann Zusatzinformationen von dem Server an den Client übermittelt werden, die Tests der dargestellten Produkte unter gesundheitlichen Aspekten beinhalten, beziehungsweise auf andere Netzwerkseiten verweisen, die derartige Informationen beinhalten.

Werden dem Benutzer also relevante Zusatzinformationen angeboten, so muss sich dieser diese Informationen nicht selbst suchen, was üblicherweise mehrere Übertragungen von Informationen zwischen dem Client und einem oder mehreren Informationsservern und damit eine vermeidbare Belastung des Kommunikationsnetzwerks und der Informationsserver bedeuten würde.

Das bekannte Verfahren hat jedoch den Nachteil, dass die von dem Informationsserver erstellten Profile nur sehr ungenau sind, da für die Erstellung der Profile nur wenige Informationen ausgewertet werden können und diese häufig nicht mehr einer aktuellen Situation entsprechen. Beispielsweise können Interessen eines Benutzers sehr schnell ändern oder ein gesuchtes Produkt wurde inzwischen erworben, weshalb auf diesen Suchergebnissen basierende Profile nicht mehr aktuell sind.

Das WWW ist ein weltweites Kommunikationsnetzwerk auf Basis des sogenannten Internets, an das viele Millionen Server und Clients angeschlossen sind. Die Anzahl der Server und Clients und insbesondere auch die Menge der zwischen den Servern und Clients übertragenen Daten ist seit der Entstehung von derartigen Kommunikationsnetzwerken stark gestiegen und wird weiter stark steigen, da zunehmend mehr Informationen über Kommunikationsnetzwerke übermittelt werden.

Um dem stetig ansteigenden Informationsbedarf von Benutzern beziehungsweise von diesen Benutzern zugeordneten Clients gerecht zu werden, werden unterschiedliche Techniken eingesetzt. Zum einen werden Kommunikationsnetze mit erhöhten Bandbreiten geschaffen und eingesetzt, beziehungsweise bestehende Kommunikationsnetzwerke erweitert. Ein Beispiel hierzu aus dem Bereich der mobilen Telekommunikation ist die Entwicklung des sogenannten UMTS (Universal Mobile Telecommunications System), das gegenwärtig das weniger leistungsfähige GSM (Global System for Mobile Telecommunications) ersetzt.

Zum anderen werden Kompressionsalgorithmen entwickelt und eingesetzt, die die über die Kommunikationsnetzwerke zu übertragenden Datenmengen reduzieren.

Eine weitere Möglichkeit zur Beherrschung des gestiegen Informationsbedarfs sind Techniken, die das Anfordern von Informationen durch eine Optimierung des Vorgangs des Anforderns beschleunigen. Mittels derartiger Optimierungstechniken wird insbesondere versucht, herkömmliche Verfahren zur Anforderung von Informationen dadurch zu beschleunigen, dass die Anforderung selbst und/oder die Übermittlung der Informationen durch Übermittlung einer möglichst geringen Anzahl von Daten beziehungsweise Datenpaketen ermöglicht wird. Dies kann zu einer Verringerung des sogenannten Netzverkehrs, also der pro Zeiteinheit über ein Kommunikationsnetzwerk zu übermittelten Daten führen.

Mit deutlich steigender Tendenz werden heutzutage beispielsweise Produkte, also Waren, Dienstleistungen und Informationen, von Informationsserver bzw. Online-Shops angeboten und von Benutzern bzw. Kunden bei den Online-Shops gekauft. Die für einen Kauf eines Produkts bei einem Online-Shop zwischen einem Benutzer, beziehungsweise einem dem Benutzer zugeordneten Client, und dem Online-Shop, beziehungsweise einem oder mehreren dem Online-Shop zugeordneten Servern, zu übermittelnden Daten erzeugen einen signifikanten Anteil des Netzverkehrs innerhalb eines Kommunikationsnetzwerks. Hierzu müssen insbesondere auch die Suche und Anforderung von Informationen gerechnet werden, die schließlich zu der Bestellung beziehungsweise dem Kauf eines Produkts führen.

Mit ebensolcher steigender Tendenz werden heutzutage allgemein Informationen von Informationsservern angefordert. Die stetig steigende Anzahl der Zugriffe auf Suchmaschinen zeigt, dass die Benutzer häufig ganz spezielle Informationen bzw. ganz spezielle Informationsserver suchen. Um die Menge der über das Kommunikationsnetzwerk zu übertragenden Daten zu reduzieren, existieren sogenannte Meta-Suchmaschinen, die ihrerseits bei Vorliegen einer Anfrage von einem Client mittels eines Suchbegriffs, gezielte Anfragen an Suchmaschinen richten, die Ergebnisse bewerten und eine Liste der bewerteten Ergebnisse an den Client übermitteln, um die Trefferwahrscheinlichkeit zu erhöhen und somit die Anzahl von ergebnislosen Suchen zu reduzieren, so dass einer Verschwendung der Ressourcen des Kommunikationsnetzwerks durch unnötige Datenübertragung erfolgen kann.

Es ist deshalb Aufgabe der Erfindung ein Verfahren zu schaffen, das eine Erhöhung der Relevanz der an einen Client übermittelten Zusatzinformationen ermöglicht und somit eine Schonung von Ressourcen sowohl des Kommunikationsnetzwerks durch eine Verringerung der über das Kommunikationsnetzwerk zu übermittelten Informationen einerseits und eine Verringerung der Auslastung von Informationsservern andererseits ermöglicht.

Insbesondere soll durch die Erhöhung der Relevanz der an einen Client übermittelten Zusatzinformationen eine Verringerung der sogenannten online-Zeit erreicht werden, wobei die online-Zeit die Zeit beschreibt, die ein Benutzer damit verwendet, mittels des ihm zugeordneten Clients Informationen mit einem oder mehreren Informationsservern auszutauschen.

Die Aufgabe wird erfindungsgemäß dadurch gelöst, dass mindestens ein zweiter Informationsserver mit dem Kommunikationsnetzwerk verbunden ist, das Profil von einem mit dem Kommunikationsnetzwerk verbundenen Profilserver erstellt wird und zur Erstellung des Profils mindestens eine Profilinformation ausgewertet wird, wobei die Profilinformation in Abhängigkeit mindestens einer Eigenschaft einer von dem zweiten Informationsserver an den Client übermittelten Netzwerkseite ermittelt wird.

Das Profil wird erfindungsgemäß von einem mit dem Kommunikationsnetzwerk verbundenen Profilserver erstellt.

Dabei werden nicht nur Profilinformationen des ersten Informationsservers verwendet, sondern es werden auch Profilinformationen des zweiten Informationsservers verwendet. Dadurch ist es möglich, dass die Profile mit höherer Genauigkeit erstellt werden können. Damit wiederum kann eine Auswahl der von dem ersten Informationsserver an den Client zu übermittelnden Zusatzinformationen mit höherer Präzision erfolgen, was zu einer höheren Relevanz der Zusatzinformation führt.

Das erfindungsgemäße Verfahren hat damit nicht nur den Vorteil, dass besonders viele Informationen für die Erstellung bzw. Aktualisierung eines Profils zur Verfügung stehen, sondern auch, dass ein Profil eine sehr hohe Aktualität hat, da die Frequenz der Erfassung von Profilinformationen dadurch erhöht wird, dass das Profil nicht nur aufgrund von Profilinformationen des ersten Informationsservers sondern insbesondere auch aufgrund von Profilinformationen des zweiten Informationsservers erstellt wird.

Dies ermöglicht es, besonders schnell und flexibel und unter Berücksichtigung einer aktuellen Situation des Benutzers diesem eine Zusatzinformation mittels einer angeforderten Netzwerkseite darzustellen.

Ferner ermöglicht es das erfindungsgemäße Verfahren, dass die Zusatzinformation nicht nur auf Netzwerkseiten, die von dem Informationsserver, über den die Profilinformationen ermittelt wurden, hier beispielsweise dem zweiten Informationsserver, sondern auch auf Netzwerkseiten, die von anderen Informationsservern, hier beispielsweise dem ersten Informationsserver, an den Client übermittelt werden, dargestellt werden können. Damit wiederum wird eine besonders schnelle und zeitnahe Versorgung des Benutzers bzw. des Clients mit relevanter Information gewährleistet. Der Benutzer hat folglich keine Veranlassung, das Kommunikationsnetzwerk einerseits, sowie einen Informationsserver andererseits, dadurch zu belasten, dass nach dieser Zusatzinformation gesucht wird.

Mittels des erfindungsgemäßen Verfahrens kann folglich die Online-Zeit reduziert werden. Damit kann eine deutliche Reduzierung des Energieverbrauchs erreicht werden, da einerseits die Datenübertragung selbstverständlich nur mittels elektrischer Energie notwendig ist und andererseits ein Benutzer den Client, beispielsweise einen PC, für eine kürzere Zeitdauer benutzt.

Vorzugsweise ist der erste und/oder zweite Informationsserver als eine Suchmaschine, eine Produktsuchmaschine, ein Online-Shop, ein Online-Forum oder ein Newsserver ausgebildet.

Diese Arten von Informationsservern haben den Vorteil, für die Erstellung von Profilen besonders relevante Profilinformationen erfassen und an den Profilserver übermitteln zu können. Beispielsweise kann der Profilserver aus Profilinformationen, die über einen Online-Shop gekaufte bzw. nicht gekaufte Waren beschreiben, Vorlieben des Benutzers ermitteln. Über ein Online-Forum können Informationen über den Benutzer interessierende Themen ermittelt werden. Ein Newsserver hält aktuelle Informationen zu unterschiedlichen Themen bereit. Ein Benutzer kann beispielsweise unterschiedliche Themen abonnieren. Anhand der abonnierten Themen ist es möglich, weitere Informationen für die Erstellung des Benutzerprofils zu erhalten. Der Informationsserver kann insbesondere als jede Art von Web-Server ausgebildet sein.

Vorteilhafterweise wird der Profilinformation eine Bedingung zugeordnet und die Profilinformation für die Erstellung des Profils nur dann berücksichtigt, wenn die Profilinformation die Bedingung erfüllt.

Durch die Vorgabe einer Bedingung kann die Qualität eines Profils und damit die Relevanz von anhand des Profils ermittelter Zusatzinformation weiter erhöht werden.

Beispielsweise wird die Bedingung durch einen Zeitpunkt, einen Zeitraum, eine Kennung eines Informationsservers oder eine Art eines Informationsservers beschrieben.

Durch eine derartige Bedingung kann eine besonders hohe Aktualität des Profils erreicht werden, da veraltete Profilinformationen nicht mehr für die Erzeugung bzw. die Aktualisierung des Profils herangezogen werden. Im folgenden soll die Erzeugung eines Profils stets auch die Aktualisierung des Profils umfassen. Beispielsweise kann vorgesehen sein, eine Produktsuche, die vor mehr als zwanzig Tagen erfolgt ist, nicht mehr bei der Erzeugung des Profils zu berücksichtigen. Oder es kann vorgesehen sein, eine Profilinformation eines durch eine Kennung identifizierbaren Informationsservers bei der Erzeugung des Profils nicht zu verwenden. Ist dem Informationsserver eine Art zugeordnet, so kann beispielsweise vorgesehen sein, eine Profilinformation eines Newsserver nicht zu verwenden, wohingegen die Profilinformation einer Suchmaschine für die Erzeugung des Profils verwendet werden soll.

Insbesondere können einer Profilinformation mehrere Bedingungen zugeordnet sein. So kann beispielsweise festegelegt werden, Profilinformationen einer Produktsuchmaschine nur innerhalb von zehn Tagen ab Ermittlung der Profilinformation bei der Erzeugung des Profils zu berücksichtigen, wohingegen die Profilinformation, die von einem Online-Forum ermittelt wurde, innerhalb von dreißig Tagen ab deren Ermittlung zu verwenden. Damit kann folglich eine besonders hohe Flexibilität und damit eine besonders hohe Aktualität eines Profils erreicht werden.

In einer vorteilhaften Weiterbildung des Verfahrens ist der von dem Client bei dem ersten Informationsserver angeforderten Netzwerkseite mindestens eine Eigenschaft zugeordnet. Die Zusatzinformation wird in Abhängigkeit von einer Auswertung dieser Eigenschaft ausgewählt. Vorzugsweise beschreibt die mindestens eine Eigenschaft der von dem Client bei dem zweiten Informationsserver angeforderten Netzwerkseite oder der von dem zweiten Informationsserver an den Client übermittelten Netzwerkseite einen Inhalt, einen Ursprung, eine Zeitdauer, eine durchgeführte Aktion oder eine nicht durchgeführte Aktion.

Der Inhalt einer Netzwerkseite kann beispielsweise mittels einer vorherigen Klassifikation der von dem ersten oder dem zweiten Informationsserver bereitgestellten Netzwerkseite beschrieben werden. Durch Auswertung des Inhalts bzw. der Klassifikation kann eine noch höhere Relevanz der Zusatzinformation erreicht werden. Ist der erste Informationsserver beispielsweise als Online-Shop ausgebildet, so können unterschiedliche Produktkategorien auf unterschiedlichen, von dem Online-Shop anforderbaren Netzwerkseiten dargestellt werden. Hat der Benutzer nun eine Netzwerkseite angefordert, auf der Zubehör zu unterschiedlichen Produkten angeboten wird, so kann mittels des erfindungsgemäßen Verfahrens erreicht werden, dass dem Benutzer eine Zusatzinformation übermittelt wird, die ein Zubehör zu einem bereits früher gekauften Produkt beschreibt. Die Information über das früher gekaufte Produkt kann hierbei dem Profil entnommen werden. Die Information darüber, dass sich der Benutzer für ein Zubehör zu diesem Produkt interessieren könnte, kann aus der Eigenschaft der angeforderten Netzwerkseite abgeleitet werden, falls diese beispielsweise den Inhalt beschreibt und dieser als "Zubehör" klassifiziert ist.

Der Ursprung einer übermittelten Netzwerkseite kann eine vorausgehende Aktion beschreiben, die die Übermittlung der Netzwerkseite an den Client ausgelöst hat. Insbesondere kann mittels des Ursprungs festgestellt werden, welche Netzwerkseite zuvor von dem Client aufgerufen wurde. Wurde die Netzwerkseite aufgrund eines auf einer anderen Netzwerkseite dargestellten Links von dem Client angefordert, so kann beispielsweise mittels eines sogenannten referers die URL der vorausgehenden Netzwerkseite ermittelt werden. Dies ermöglicht es insbesondere auch den Informationsserver, der die vorausgehende Netzwerkseite an den Client übermittelt hat, zu ermitteln.

Die Zeitdauer beschreibt beispielsweise die Zeit zwischen der Anforderung einer Netzwerkseite und der Anforderung einer weiteren, von dem Informationsserver oder einem weiteren Informationsserver bereitgestellten Netzwerkseite. Aus der Zeitdauer kann darauf geschlossen werden, ob der Benutzer sich die auf der Netzwerkseite dargestellten Informationen näher angesehen hat, diese also von prinzipiellem Interesse sein könnten, oder ob der Benutzer innerhalb eines sehr kurzen Zeitraums eine weitere Netzwerkseite angefordert hat, die Netzwerkseite folglich von eher geringer Relevanz für den Benutzer war.

Eine durchgeführte Aktion kann beispielsweise das Aktivieren eines auf einer an den Client übermittelten Netzwerkseite dargestellten Links sein. Entsprechend kann eine nicht durchgeführte Aktion das Nicht-Aktivieren eines auf der Netzwerkseite dargestellten Links sein. Unter einer Aktion kann ferner eine Zusammenfassung mehrerer Unteraktionen verstanden werden. Ist der erste oder der zweite Informationsserver beispielsweise als ein Online-Shop ausgebildet, so kann eine durchgeführte bzw. nicht durchgeführte Aktion den ausgeführten bzw. den nicht ausgeführten Kauf eines Produkts beschreiben.

Diese Eigenschaften sind besonders geeignet, Profilinformationen zu generieren, die in ein Profil aufgenommen werden können.

Das Profil kann beispielsweise mittels eines Expertensystems in Abhängigkeit von den Eigenschaften der von dem zweiten Informationsserver angeforderten Netzwerkseite erstellt. Ein Expertensystem beschreibt die Anordnung und Gewinnung von Wissen im Rahmen der sogenannten Künstlichen Intelligenz. Ein Expertensystem ist beispielsweise als sogenanntes regelbasiertes Expertensystem ausgeführt. Hierbei wird durch Abarbeitung von vorgebbaren Regeln eine Entscheidung generiert bzw. im vorliegenden Fall ein Profil erstellt. Dies ermöglicht es, bei der Erstellung des Profils sämtliche zur Verfügung stehenden Eigenschaften zu berücksichtigen und in einer Art Entscheidungsbaum in Abhängigkeit von den Eigenschaften und gegebenenfalls der den Profilinformationen zugeordneten Bedingungen das Profil zu erstellen.

Auch die darzustellende Zusatzinformation kann vorteilhaft mittels eines Expertensystems in Abhängigkeit von dem erstellten Profil ausgewählt. Ist das Expertensystem als regelbasiertes Expertensystem ausgebildet, kann durch Abarbeitung von vorgebbaren Regeln die Zusatzinformation ausgewählt werden. Dies kann beispielsweise in einer Art Entscheidungsbaum in Abhängigkeit von den einzelnen Parametern des Profils erfolgen.

In einer vorteilhaften Weiterbildung des Verfahrens fordert der erste Informationsserver die Übermittlung des Profils von dem Profilserver an, der Profilserver übermittelt das Profil an den Informationsserver und der Informationsserver wählt anhand des Profils eine geeignete Zusatzinformation aus. Hierbei kann der Informationsserver beispielsweise auch die Funktionalität des Zusatzinformationsservers aufweisen. Dazu kann dem Informationsserver eine Datenbank zugeordnet sein, in der die Zusatzinformationen abgespeichert sind. Der Zusatzinformationsserver kann also insbesondere auch als Software ausgebildet sein.

Dies hat den Vorteil, dass der Informationsserver besonders flexibel und unabhängig von dem Profilserver Regeln für die Auswahl der Zusatzinformationen erstellen und implementieren kann.

Gemäß einer anderen vorteilhaften Weiterbildung der Erfindung fordert der erste Informationsserver von dem Profilserver die Zusatzinformation an, wobei der Profilserver die Zusatzinformation in Abhängigkeit von dem Profil auswählt.

Die Auswahl einer geeigneten Zusatzinformation wird gemäß dieser Ausführungsform folglich von dem Profilserver durchgeführt. Dies hat den Vorteil, dass die für die Auswahl notwendige Intelligenz alleine bei dem Profilserver vorhanden sein muss. Ferner wird das Kommunikationsnetzwerk geringer belastet, da keine Übertragung eines Profils von dem Profilserver an einen Informationsserver erfolgt. Zur Auswahl ist es vorstellbar, dass die Zusatzinformationen selbst oder Informationen, die eine Identifizierung der auf einem Zusatzinformationsserver abgelegten Zusatzinformation ermöglichen, in einer dem Profilserver zugeordneten Datenbank abgelegt sind.

Gemäß einer weiteren vorteilhaften Ausführungsform wird das Profil an den Zusatzinformationsserver übermittelt und die Auswahl der Zusatzinformationen von dem Zusatzinformationsserver in Abhängigkeit von dem übermittelten Profil durchgeführt.

Hierbei kann der Profilserver völlig unabhängig von den zur Verfügung stehenden Zusatzinformationen betrieben werden. Für die Auswahl einer geeigneten Zusatzinformation wird das Profil an den Zusatzinformationsserver übermittelt, der in Abhängigkeit von dem Profil die Auswahl einer geeigneten Zusatzinformation vornimmt.

Zur Übermittlung der ausgewählten Zusatzinformation veranlasst der Profilserver beispielsweise, dass eine die ausgewählte Zusatzinformation identifizierende Information an den Informationsserver übermittelt wird. Dies kann einerseits dadurch erfolgen, dass die Zusatzinformation direkt an den Informationsserver übermittelt wird. Es ist andererseits auch möglich, dass der Profilserver beispielsweise eine URL an den Informationsserver übermittelt, unter der die Zusatzinformation von dem Zusatzinformationsserver abrufbar ist. Dies ist insbesondere vorteilhaft, wenn die Zusatzinformation nicht direkt auf der Netzwerkseite dargestellt werden soll, sondern lediglich als Link zu einer Netzwerkseite des Zusatzinformationsservers dargestellt werden soll.

Insbesondere ist auch eine Kombination derart vorstellbar, dass die auf der Netzwerkseite darzustellende Zusatzinformation eine direkt darstellbare Information sowie einen Link zu weiterführender Information oder beispielsweise zu auf der Netzwerkseite dazustellender graphischer Information enthält.

In einer vorteilhaften Weiterbildung des Verfahrens wird für die Zuordnung der Profilinformationen zu dem Profil mindestens eine dem Client zugeordnete Kennung ausgewertet. Hierbei wird beispielsweise die dem Client zugeordnete Kennung zusammen mit der Profilinformation an den Profilserver übermittelt. Dies ermöglicht auf besonders einfache Weise die Zuordnung von Profilinformationen zu einem bereits bestehenden bzw. einem neu zu erstellenden Profil.

Vorzugsweise wird das für die Auswahl der Zusatzinformation zu verwendende Profil durch Auswertung mindestens einer dem Client zugeordneten Kennung ausgewählt. Die mindestens eine Kennung ermöglicht es folglich, das dem Benutzer bzw. dem Client zugeordnete Profil aufzufinden und dann in Abhängigkeit von einer Auswertung des Profils eine Auswahl der Zusatzinformation vorzunehmen. Eine Kennung kann beispielsweise eine sogenannte Benutzerkennung oder user-id sein, mittels der sich der Benutzer bei einem Informationsserver, beispielsweise einem Online-Shop, anmeldet.

Hierbei ist es vorstellbar, dass der Informationsserver die Kennung an den Profilserver übermittelt, dieser die Kennung auswertet, das Profil auswählt und das ausgewählte Profil an den Informationsserver zurücksendet, eine Zusatzinformation auswählt oder ein angeordnetes Tracking-System zur Auswahl einer Zusatzinformation veranlasst.

Mittels dieser Ausführungsform des erfindungsgemäßen Verfahrens können insbesondere mehrere einem Benutzer und/oder einem Client zugeordnete Kennungen ausgewertet werden, um das dem Benutzer zugeordnete Profil auszuwählen. Dies kann beispielsweise dann vorteilhaft sein, wenn eine dem Benutzer oder dem Client zugeordnete Kennung keine eindeutige Kennung ist oder die Möglichkeit besteht, dass diese Kennung auch von einem anderen Benutzer oder Client verwendet wird.

Besonders vorteilhaft ist es hierbei, wenn die Kennung aus einem Cookie, einer Gerätenummer oder einer Einwahlnummer gebildet wird. Insbesondere kann vorgesehen sein, dass das Cookie von dem Profilserver bei dem Client gesetzt wird. Eine Gerätenummer kann beispielsweise die Nummer einer Netzwerkkarte sein. Diese ermöglicht eine eindeutige Identifizierung des Clients. Eine Einwahlnummer kann beispielsweise eine dem Benutzer zugeordnete Benutzerkennung sein, mit der sich der Benutzer mittels des ihm zugeordneten Clients beispielsweise über einen Zugangsprovider bei dem Kommunikationsnetzwerk anmeldet. Dies ermöglicht ferner auch, dass dem Benutzer bzw. dem Client ein Profil zugeordnet werden kann, ohne dass die reale Identität, also beispielsweise Name und Adresse des Benutzers bekannt sind, so dass die Anonymität des Benutzers gewahrt bleiben kann.

Vorzugsweise sind dem Profil mehrere Kennungen zugeordnet. Es kann vorgesehen sein, ein Cookie bei jeder von dem Client initiierten Aktion, also beispielsweise dem Anfordern einer Netzwerkseite, dem Aktivieren eines Links, dem Kauf eines Produkts oder dem Suchen nach Informationen bei dem Client zu setzen. Dies hat den Vorteil, dass die eine Aktivierung eines Links beschreibenden Eigenschaften in dem Cookie bei dem Client abgespeichert werden können und diese Informationen von dem Profilserver auch wieder in Form der bei dem Client gesetzten Cookies abgefragt werden können.

Damit ist es dem Profilserver möglich, die für die Erstellung bzw. das Aktualisieren eines Profils benötigten Informationen unabhängig von dem ersten oder zweiten Informationsserver direkt aus den bei dem Client abgespeicherten Cookies zu extrahieren.

Insbesondere können auch unabhängig oder zusätzlich zu den Cookies eine Einwahlnummer oder Gerätenummern zur Identifizierung des Benutzers, des Clients oder des Profils herangezogen werden.

Gemäß einer besonders bevorzugten Ausführungsform des erfindungsgemäßen Verfahrens, wird ein Verhalten des Benutzers ausgewertet und die Kennung in Abhängigkeit von der Auswertung des Verhaltens gebildet.

Ein Verhalten des Benutzers kann beispielsweise derart ermittelt werden, dass ein Zeitraum bestimmt wird, innerhalb dessen der Benutzer mit annähernder Regelmäßigkeit von einem möglicherweise bestimmten Informationsserver eine Information anfordert. Die Auswertung des Verhaltens des Benutzers kann insbesondere in Verbindung mit einer oder mehrerer anderer Kennungen zur Auswahl des Profils eingesetzt werden. Wird beispielsweise ein in Form eines PC ausgebildeter Client von mehreren Benutzern genutzt, wobei ein Benutzer diesen PC stets tagsüber, der andere den PC jedoch überwiegend abends nutzt, so kann durch Auswertung der aktuellen Uhrzeit der Benutzer und damit das diesem zugeordnete Profil ermittelt werden. Ein Verhalten kann auch durch die Eingabe bestimmter Zeichen mittels einer dem Client zugeordneten Tastatur beschrieben werden.

Auch aus bestimmten Einstellungen eines auf dem Client ablaufenden Computerprogramms, beispielsweise eines Browsers, kann ein Verhalten des Benutzers ermittelt werden. Insbesondere durch Auswertung sogenannter log-Dateien, die von auf dem Client ablaufender Software erzeugt werden, kann ein Verhalten des Benutzers bestimmt werden. Eine log-Datei kann beispielsweise von einem Browser erzeugt werden und Informationen über den Zeitpunkt und die Identität eines Informationsservers enthalten, von dem der Benutzer Informationen angefordert hat. Eine log-Datei kann auch Informationen darüber enthalten, wann und wie lange der Benutzer bei dem Client, einem Informationsserver oder dem Kommunikationsnetzwerk angemeldet ist.

Vorzugsweise wird das Verhalten in Abhängigkeit mindestens einer Position eines dem Client zugeordneten Zeigegeräts ermittelt. Ein derartiges Zeigegerät ist beispielsweise eine sogenannte Computermaus, ein Touchpad, ein Trackball oder eine dem Client zugeordnete Tastatur. Mittels eines Zeigegeräts kann ein Benutzer eine Positionsmarke, die beispielsweise als Pfeil graphisch dargestellt wird, auf einem dem Client zugeordneten Bildschirm über den auf dem Bildschirm dargestellten Inhalt bewegen und beispielsweise einzelne Stellen des dargestellten Inhalts markieren. Insbesondere kann mittels des Zeigegeräts auch ein dargestellter Link aktiviert werden. Eine Position kann hierbei beispielsweise mittels der sogenannten X-Y-Koordinaten des Zeigegeräts beschrieben werden.

Vorteilhafterweise wird das Verhalten in Abhängigkeit eines Bewegungsablaufs eines dem Client zugeordneten Zeigegeräts ermittelt. Ein Bewegungsablauf kann beispielsweise durch eine Serie von Positionen des Zeigegeräts beschrieben werden. Insbesondere kann eine derartige Serie von Positionen mit einer Zeitinformation versehen sein. Damit ist es dann möglich zu beurteilen, ob und wie lange das Zeigegerät an einer bestimmten Position oder in einer vorgegebenen Umgebung einer bestimmten Position positioniert war. Daraus kann einerseits ein bestimmtes Interesse des Benutzers für einen an dieser Position dargestellten Inhalt abgeleitet werden. Ferner kann anhand eines solchen Bewegungsablaufs ein benutzertypisches Verhalten abgeleitet werden. Daraus wiederum kann ein bestimmter Benutzer, möglicherweise in Verbindung mit der Auswertung weiterer Kennungen, identifiziert bzw. ein dem Benutzer zugeordnetes Profil ausgewählt werden.

In einer bevorzugten Ausführungsform wird von dem Verhalten eine Profilinformation abgeleitet und in dem Profil abgespeichert. Aus dem Verhalten kann beispielsweise abgeleitet werden, ob ein Benutzer vorzugsweise in den späten Abendstunden an einem Computer arbeitet oder welche Informationsart ein Benutzer zu einer bestimmten Tageszeit anfordert. Dies kann dann beispielsweise bei der Auswahl der Zusatzinformation derart berücksichtigt werden, dass in Abhängigkeit von der Tageszeit die auf einer Start-Seite darzustellende Zusatzinformation ausgewählt wird.

Vorteilhafterweise ist dem Profilserver ein Tracking-System zugeordnet.

Es ist heutzutage üblich, dass einer oder mehrere der dem Informationsserver zugeordneten Zusatzinformationsserver einem sogenannten Tracking-System zugeordnet ist. Ein derartiges Tracking-System ist beispielsweise unter http://www.zanox.de oder unter http://www.affilinet.de erreichbar. Ein Tracking-System ermöglicht es einem Informationsserver einerseits, einen oder mehrere der dem Tracking-System zugeordneten Zusatzinformationsserver auszuwählen. Andererseits kann ein Informationsserver dort Zusatzinformationen hinterlegen, die dann von potentiellen, bei dem Tracking-System registrierten Zusatzinformationsservern auf den Netzwerkseiten anderer Informationsserver dargestellt werden können.

Ein Tracking-System verwaltet damit beispielsweise Werbepartner eines Online-Shops. Der Online-Shop selbst muss in diesem Fall nicht notwendigerweise Informationen über die Identität der Werbepartner selbst besitzen. Zweckmäßigerweise wird das Tracking-System den Online-Shop jedoch regelmäßig über die aktuell dem Online-Shop zugeordneten Werbepartner informieren.

Ist einer oder mehrere der dem Informationsserver zugeordneten Zusatzinformationsserver einem Tracking-System zugeordnet, so veranlasst der Informationsserver im Falle der Aktivierung eines Links durch einen Benutzer den Client, alle dort abgelegten Cookies, die von einem dem Tracking-System zugeordneten Zusatzinformationsserver bei dem Client gesetzt wurden, an den jeweiligen Zusatzinformationsserver zu übermitteln. Die Zusatzinformationsserver wiederum, die eine Kopie des bei dem Client gesetzten Cookies von diesem erhalten, senden eine Nachricht an das Tracking-System. Das Tracking-System leitet diese Nachricht an den Profilserver weiter, der daraus ein Profil erstellt bzw. ein Profil aktualisiert. Selbstverständlich ist es vorstellbar, dass sowohl das Tracking-System als auch der Profilserver in Software also in Form von Computerprogrammen realisiert sind. Dabei ist es insbesondere möglich, dass das Tracking-System und der Profilserver auf dem gleichen Computersystem ablaufen und lediglich funktional getrennt sind.

Gemäß einer vorteilhaften Weiterbildung des Verfahrens wird für das Auswählen einer darzustellenden Zusatzinformation mindestens ein der Zusatzinformation zugeordnetes Merkmal ausgewertet. Dies ermöglicht es, die Zusatzinformation nicht nur in Abhängigkeit des Profils des Benutzers, sondern auch in Abhängigkeit von übergeordneten Parametern auszuwählen.

Vorzugsweise beschreibt das Merkmal eine Zeit, eine Zeitspanne, eine Branche, einen Themenbereich, eine Anzahl von Aktivierungen, eine Anzahl von Leads, eine Anzahl von Sales oder eine Conversion.

Eine Zeit beschreibt beispielsweise eine Tageszeit oder eine Jahreszeit, innerhalb derer die Zusatzinformation nicht oder gerade ausgewählt werden soll. Eine Branche beschreibt eine Klassifizierung der Zusatzinformation hinsichtlich eines geschäftlichen Umfeldes. Damit ist es möglich, eine Zusatzinformation besonders dann auszuwählen, wenn der Zusatzinformation eine Branche oder ein Themenbereich zugeordnet ist, die in Einklang mit Informationen des Profils ist.

Soll die Zusatzinformation in Form eines Links auf der Netzwerkseite dargestellte werden, so kann der Zusatzinformation eine Anzahl von Aktivierungen zugeordnet sein, die beschreibt, wie häufig die Zusatzinformation bereits bei früheren Darstellungen auf einer Netzwerkseite aktiviert wurde. Führt die Zusatzinformation zu einem weiteren Informationsserver, beispielsweise einem Online-Shop, bei dem sich ein Benutzer zur Ansicht von Informationen registrieren muss, so kann mittels der Anzahl von Leads festgestellt werden, wie häufig eine Registrierung stattfand, ohne dass weitere Informationen angefordert wurden, insbesondere ohne dass ein Produkt gekauft wurde. Eine Anzahl von Sales beschreibt, wie häufig aufgrund von einer Darstellung der Zusatzinformation auf einer Netzwerkseite tatsächlich der Verkauf bzw. die Bestellung eines Produkts erfolgt ist. Eine Conversion beschreibt das Verhältnis von innerhalb einer vorgebbaren Zeit erfolgten Leads zu den innerhalb dieser Zeitspanne erfolgten Sales. So kann vorgesehen sein, Zusatzinformation, die ein Produkt eines Online-shops betreffen, nicht mehr darzustellen, wenn es eine besonders hohe Zahl von Leads aber nur eine sehr geringe Anzahl von Sales aufweist. Eine solche Zusatzinformation ist mit hoher Wahrscheinlichkeit nicht relevant, so dass eine Darstellung dieser Information auf einer Netzwerkseite mit hoher Wahrscheinlichkeit zu einer Verschwendung von Ressourcen führen würde.

Gemäß einer besonders bevorzugten Ausführungsform, bei der dem Client ein Softwareelement zugeordnet ist, wird die ausgewählte Zusatzinformation an das Softwareelement über das Kommunikationsnetzwerk übertagen und mittels des Softwareelements wird eine Darstellung der Zusatzinformation veranlasst.

Ein derartiges Softwareelement kann beispielsweise der auf dem Client ablaufende Browser sein. Dabei kann vorgesehen sein, dass der Browser die an diesen übermittelte Zusatzinformation in die darzustellende Netzwerkseite integriert. Es kann ferner vorgesehen sein, dass der Browser einen Bereich oder mehrere Bereiche für die Darstellung der Zusatzinformation vorsieht und die Zusatzinformation in diesem Bereich dargestellt wird. Das Softwareelement kann beispielsweise als ein sogenanntes plug-in ausgebildet sein. Bei einem plug-in handelt es sich um eine Softwarekomponente, die einer bestehenden Software hinzugefügt wird und dadurch die Funktionalität der bestehenden Software erweitert.

Diese Ausführungsform hat den Vorteil, dass die Zusatzinformationen direkt an den Client übermittelt werden ohne zuvor an den Informationsserver übermittelt zu werden. Dadurch können nochmals Ressourcen geschont werden. Insbesondere wird die Rechenleistung des Informationsservers weniger belastet und das Kommunikationsnetzwerk wird geringer belastet, da die die Zusatzinformation repräsentierenden Daten nur einmal übermittelt werden müssen.

Vorzugsweise wird die ausgewählte Zusatzinformation von dem Profilserver oder dem Zusatzinformationsserver direkt an den Client übermittelt. Dadurch wird eine weitere Entlastung des Kommunikationsnetzwerks erreicht.

In einer vorteilhaften Weiterbildung des Verfahrens wird die von dem ersten Informationsserver oder die von dem zweiten Informationsserver angeforderte Netzwerkseite in Form eines RSS-Feeds an den Client übermittelt.

RSS ist eine Beschreibungssprache und definiert ein Datenformat, mittels dessen Artikel oder deren Kurzbeschreibungen, beispielsweise Nachrichtenmeldungen, auf einem Informationsserver gespeichert und in maschinenlesbarer Form bereitgestellt werden können. Ein sogenannter RSS-Feed oder Newsfeed besteht aus einer XML-Datei, die lediglich den Inhalt, also beispielsweise die eigentliche Nachricht einer Nachrichtenseite, bereithält, aber keinerlei Layouts oder Design beinhaltet. Viele Seiten, die regelmäßig Artikel publizieren, generieren eine sogenannte RSS-Datei mit den neuesten Artikeln und veröffentlichen diese mittels eines Informationsservers.

Gemäß dieser Weiterbildung ist es einerseits möglich, in Abhängigkeit von einem abonnierten RSS-Feed Profilinformationen über den Benutzer zu generieren, indem beispielsweise die Themen von abonnierten RSS-Feeds bei der Erzeugung des Profils berücksichtigt werden. Andererseits ist es möglich, einem von einem Informationsserver an einen Client übermittelten RSS-Feed Zusatzinformationen beizufügen oder zu veranlassen, dass derartige Zusatzinformationen an den Client übermittelt werden.

Gemäß einer weiteren bevorzugten Ausführungsform des erfindungsgemäßen Verfahrens wird unabhängig von der Anforderung einer Netzwerkseite bei dem ersten Informationsserver automatisch eine Übermittlung einer Zusatzinformation an den Client veranlasst. Hierbei kann die automatische Anforderung der Zusatzinformation beispielsweise mittels einer bei dem Client ablaufenden Software durchgeführt werden. Vorteilhafterweise wird die daraufhin an den Client übermittelte Zusatzinformation dann auch von dem Softwareelement dargestellt. Dies ermöglicht folglich die völlig automatisierte Übermittlung von Zusatzinformationen an den Client bzw. an den Benutzer.

Gemäß einer besonders bevorzugten Ausführungsform des erfindungsgemäßen Verfahrens fordert der Client von dem ersten Informationsserver eine Start-Seite an. Der Informationsserver übermittelt daraufhin die ausgewählte Zusatzinformation als Bestandteil der angeforderten Start-Seite an den Client. Alternativ hierzu versieht der Informationsserver die Start-Seite mit mindestens einem aktivierbaren Verweis zu mindestens einer Zusatzinformation.

Eine Start-Seite wird auch als Home-Page bezeichnet und beschreibt die Seite, die von einem Informationsserver standardmäßig an einen Client übermittelt wird. Die der Start-Seite zugeordnete URL ist hierbei typischerweise auf oberster Ebene angesiedelt und ist beispielsweise mit der dem Informationsserver selbst zugeordneten URL identisch. Intern verweist diese URL dann auf einen besondere Datei, die beispielsweise als "index.html" oder als "home.htm" bezeichnet wird.

Eine derartige Start-Seite wird besonders häufig in einem ersten Schritt durch Eingabe einer URL angefordert, wenn ein Benutzer eine von dem Informationsserver bereitgestellte Information abrufen möchte. Viele Informationsserver ermöglichen sogar einen Zugriff auf abrufbare Informationen ausschließlich über spezielle Eingabefelder oder Links, die auf der Start-Seite dargestellt sind. Es ist folglich von besonderem Vorteil, wenn die Zusatzinformationen bereits zusammen mit der Start-Seite an den die Startseite anfordernden Client übermittelt werden, bzw. durch Aktivieren von auf der Start-Seite dargestellten Links angefordert werden können. Dadurch kann die Anzahl der Anforderung weiterer Netzwerkseiten reduziert werden. Insbesondere kann durch die Auswertung des dem Benutzer zugeordneten Profils implizit eine Vorhersage getroffen werden, welche Informationen mit hoher Wahrscheinlichkeit von dem Benutzer abgefragt werden könnten. Ist die Start-Seite beispielsweise einer Suchmaschine zugeordnet, so kann damit erreicht werden, dass der Benutzer einen Suchbegriff erst gar nicht mehr eingeben muss, falls bereits auf der Start-Seite eine Zusatzinformation angezeigt wird, nach der der Benutzer eigentlich durch Eingabe eines Suchbegriffs suchen wollte.

Ist der erste Informationsserver als ein Online-Shop ausgebildet, so ist es mit dieser Ausführungsform möglich, bereits auf der Start-Seite des Online-Shops dem Benutzer eine oder mehrere Zusatzinformationen bezüglich eines oder mehrerer Produkte anzuzeigen, die von dem Benutzer mit hoher Wahrscheinlichkeit gekauft werden.

Mittels einer derartig personalisierten Start-Seite wird folglich die Menge der zwischen dem dem Benutzer zugeordneten Client und dem Informationsserver, beispielsweise dem Online-Shop, über das Kommunikationsnetzwerk auszutauschenden Daten reduziert, da nicht eine Vielzahl von Netzwerkseiten von dem Benutzer mittels des Client von dem Informationsserver angefordert werden müssen, um schließlich ein bestimmtes Produkt zu finden.

Vorteilhafterweise werden hierbei Zusatzinformationen auf der Start-Seite des ersten Informationsservers dargestellt, die von einem Zusatzinformationsserver bereitgestellt werden, der dem zweiten Informationsserver oder einem weiteren Informationsserver zugeordnet ist.

Ist beispielsweise der erste Informationsserver ein Online-Shop und fordert der Benutzer mittels des Client die Start-Seite dieses Online-Shops an, so kann vorgesehene sein, dass auf der Start-Seite eine Zusatzinformation dargestellt wird, die ein Produkt beschreibt, das von einem anderen Online-Shop zum Kauf angeboten wird. Führt der Benutzer mittels des Clients eine Aktion bezüglich dieser Zusatzinformation aus, kauft er also beispielsweise das Produkt, so kann vorgesehen sein, dass der Betreiber des ersten Online-Shops eine Vergütung erhält.

Damit ist es möglich, die Netzbelastung nochmals zu verringern, da einem Benutzer eines Clients Zusatzinformationen bereits dann dargestellt werden können, wenn der Benutzer eine Start-Seite von dem ersten Informationsserver anfordert. Da hierbei das erfindungsgemäße Profil ausgewertet wird, kann eine besonders hohe Relevanz der Zusatzinformation erreicht werden. Dies bedeutet, dass einem Benutzer unabhängig von der Start-Seite, die er anfordert, stets hoch aktuelle und hoch relevante Zusatzinformationen angezeigt werden können, wobei diese Zusatzinformationen nicht notwendig von dem ersten Informationsserver stammen müssen sondern von jedem anderen mit dem Kommunikationsnetzwerk verbundenen Informationsserver bereitgestellt werden können. Insbesondere können derartige Zusatzinformationen selbstverständlich von einem unabhängig betriebenen Zusatzinformationsserver bereitgestellt werden.

Fordert der Benutzer 12 nun eine weitere Netzwerkseite 5 von dem Online-Shop an, so kann mittels des erfindungsgemäßen Verfahrens eine dieser Netzwerkseite 5 zugeordnete Eigenschaft ausgewertet werden. Diese Eigenschaft kann beispielsweise den Inhalt bzw. einen Teil des Inhalts beschreiben bzw. zumindest einen Teil des Inhalts klassifizieren. Zusammen mit dem Ergebnis der Auswertung des Profils kann damit eine noch höhere Relevanz der zu übermittelnden Zusatzinformation erreicht werden, da ein aktuelles Interesse des Benutzers 12 mit einem oder mehreren aus früheren Profilinformationen generierten Interessenprofilen kombiniert werden.

Gemäß einer weiteren vorteilhaften Ausführungsform des Verfahrens, bei dem der erste Informationsserver 3 als ein Online-Shop ausgebildet ist, umfasst ein Kauf eines Produkts mehrere Aktionen. Die Aktion umfasst beispielsweise eine Bestellung, eine Bestellbestätigung, eine Bezahlung oder eine Versendung der Ware. Bei dieser Ausführungsform wird der Kauf eines von dem Online-Shop angebotenen Produkts eingeleitet. Die Zusatzinformation 18a, 18b betrifft ein weiteres Produkt und der Kauf des weiteren Produkts wird ebenfalls eingeleitet. Hierbei kann die Zusatzinformation 18a, 18b beispielsweise ein Werbebanner sein, dem ein aktivierbarer Link zugeordnet ist. Eine Aktivierung des Links kann beispielsweise das Produkt automatisch einem virtuellen Warenkorb hinzufügen oder automatisch die Bestellung des weiteren Produkts veranlassen. Hierbei ist es besonders vorteilhaft, wenn bei dem Kauf des weiteren Produkts mindestens eine Aktion zusammen mit der entsprechenden, für den Kauf des von dem Online-Shop angebotenen Produkts durchzuführenden Aktion, durchgeführt wird. Beispielsweise wird nur eine Bezahlung für beide Produkte zusammen durchgeführt oder beide Produkte werden zusammen an den Benutzer 12 versendet.

Das weitere Produkt braucht hierbei nicht von dem ersten Informationsserver 3 zum Kauf angeboten werden. Es ist vielmehr vorstellbar, dass das weitere Produkt von einem anderen Online-Shop zum Kauf angeboten wird, der erste Informationsserver also lediglich einen Link zu dem zweiten Online-Shop und damit zu dem von diesem angebotenen Produkt an den Benutzer 12 bzw. den Client 9 übermittelt. Mittels dieser Ausführungsform kann folglich die Belastung des Kommunikationsnetzwerks nochmals verringert werden.

Die Aufgabe wird auch gelöst durch ein eingangs genanntes Client-Server-System, wobei
- das Client-Server-System mindestens einen zweiten Informationsserver aufweist;
- der zweite Informationsserver mit dem Kommunikationsnetzwerk verbunden ist;
- das Client-Server-System einen Profilserver aufweist;
- der Profilserver Mittel zur Erstellung eines Profils in Abhängigkeit von der Auswertung mindestens einer Profilinformation aufweist;
- das Client-Server-System Mittel aufweist, um die Profilinformation in Abhängigkeit mindestens einer Eigenschaft einer von dem zweiten Informationsserver an den Client übermittelten Netzwerkseite zu ermitteln.

Vorzugsweise weist das Client-Server-System Mittel zur Durchführung des erfindungsgemäßen Verfahrens auf.

Die Erfindung wird auch durch einen Profilserver gelöst, wobei der Profilserver Mittel zur Durchführung des erfindungsgemäßen Verfahrens aufweist.

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Server ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. In der Zeichnung zeigen:
- Figur 1: ein erfindungsgemäßes Client-Server-System in einer ersten Ausführungsform;
- Figur 2: ein Ablaufdiagramm eines erfindungsgemäßen Verfahrens in einer ersten Ausführungsform;
- Figur 3: ein erfindungsgemäßes Client-Server-System in einer zweiten Ausführungsform;
- Figur 4: ein Ablaufdiagramm eines erfindungsgemäßen Verfahrens in einer zweiten Ausführungsform.

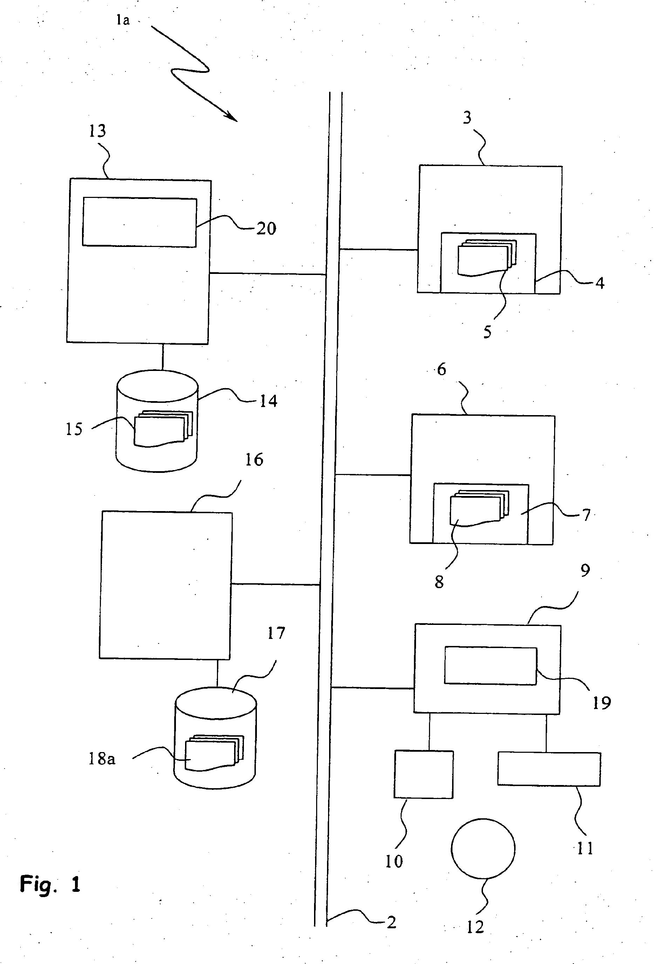

In Figur 1 ist schematisch ein erfindungsgemäßes Client-Server-System 1a dargestellt, das zur Durchführung des erfindungsgemäßen Verfahrens geeignet ist. Das Client-Server-System 1a umfasst ein Kommunikationsnetzwerk 2, das beispielsweise als das Internet ausgebildet ist. Das Kommunikationsnetzwerk 2 kann ebenso gut auch als ein Funknetzwerk ausgebildet sein.

An das Kommunikationsnetzwerk 2 ist ein erster Informationsserver 3 angeschlossen. Der erste Informationsserver 3 weist einen Speicherbereich 4 auf, in dem eine oder mehrere Netzwerkseiten 5 abgespeichert sind.

Das Client-Server-System 1a weist ferner einen mit dem Kommunikationsnetzwerk 2 verbundenen zweiten Informationsserver 6 auf. Der zweite Informationsserver 6 weist ebenfalls einen Speicherbereich 7 auf, in dem eine oder mehrere Netzwerkseiten 8 abgespeichert sind.

Das Client-Server-System 1a weist außerdem einen Client 9 auf. Dem Client 9 sind ein Display 10 und ein Eingabegerät 11 zugeordnet. Der Client 9 kann beispielsweise als ein Personal Computer (PC) ausgebildet sein. Der Client 9 kann auch als ein mobiles Telekommunikationsgerät oder als Pocket-Computer (PDA, Handheld) ausgebildet sein. Das Eingabegerät 11 kann beispielsweise als Computertastatur, eine Computermaus, ein Touchpad oder als die Nummerntastatur eines mobilen Telekommunikationsgeräts ausgebildet sein. Das Display 10 und das Eingabegerät 11 dienen der Interaktion zwischen dem Client 9 und einem Benutzer 12. Das Eingabegerät 11 kann also insbesondere auch ein Zeigegerät sein.

Mit dem Kommunikationsnetzwerk 2 ist ferner ein Profilserver 13 verbunden. Dem Profilserver 13 ist eine Datenbank 14 zugeordnet. In der Datenbank 14 ist mindestens ein Profil 15 abgespeichert.

Das Client-Server-System 1a weist ferner einen Zusatzinformationsserver 16 auf, dem eine Datenbank 17 zugeordnet ist. In der Datenbank 17 sind Zusatzinformationen 18a abgespeichert.

Auf den einzelnen Komponenten des Client-Server-Systems, insbesondere auf dem Profilserver 13, dem ersten Informationsserver 3, dem zweiten Informationsserver 6, dem Zusatzinformationsserver 16 sowie auf dem Client 9 laufen jeweils Computerprogramme ab, die eine Kommunikation der Komponenten untereinander ermöglichten.

Beispielsweise läuft auf dem Client 9 ein Browser 19 ab, der es ermöglicht, Eingaben des Benutzers 12 auszuwerten und in eine Anforderung einer Netzwerkseite von dem ersten Informationsserver 3 umzuwandeln. Ferner ermöglicht es der Browser 19, dass eine von dem Client 9 empfangene Netzwerkseite 5, 8 interpretiert wird und auf dem Display 10 dem Benutzer 12 zur Ansicht dargestellt wird. Auf dem Profilserver 13 läuft ein Expertensystem 20 ab. Das Expertensystem 20 kann beispielsweise als regelbasiertes Expertensystem 20 ausgebildet sein.

In Figur 1 ist die Funktionsweise des Client-Server-Systems 1 in einem ersten Ausführungsbeispiel dargestellt. Das Verfahren beginnt in einem Schritt 100. In einem Schritt 101 fordert der Client 9 von dem zweiten Informationsserver 6 eine Netzwerkseite 8 an. Die Anforderung wird dadurch gestartet, dass der Benutzer 12 mittels des Eingabegeräts 11 eine URL in ein dem Browser 19 zugeordnetes Eingabefenster eingibt. Der Browser 19 veranlasst daraufhin den Client 9, vom dem zweiten Informationsserver 6 die durch die URL adressierte Netzwerkseite 8 anzufordern. Der zweite Informationsserver 6 veranlasst daraufhin, dass die von dem Client 9 angeforderte Netzwerkseite 8 an den Client 9 mittels des Kommunikationsnetzwerks 2 übermittelt wird.

In einem Schritt 102 wird eine Profilinformation an den Profilserver 13 von dem zweiten Informationsserver 6 übermittelt. Eine Profilinformation kann hierbei beispielsweise ein der an den Client 9 übermittelten Netzwerkseite 8 zugeordneter Überbegriff sein, der den Inhalt der Netzwerkseite 8 beschreibt. Beispielsweise sind hierzu die auf dem zweiten Informationsserver 6 abgespeicherten Netzwerkseiten 8 nach vorgebaren Kriterien klassifiziert. Derartige Kriterien können Überbegriffe sein, die den Inhalt der Netzwerkseiten beschreiben. Ist der zweite Informationsserver 6 als eine Suchmaschine ausgebildet, so kann das Kriterium auch der von dem Benutzer 12 mittels des Client 9 an die Suchmaschine übermittelte Suchbegriff sein. Ist der zweite Informationsserver 6 eine Produktsuchmaschine, so kann das Kriterium die Bezeichnung eines gesuchten oder dargestellten Produkts selbst oder ein Oberbegriff des Produkts sein. Ist der zweite Informationsserver 6 ein Online-Shop, so kann das Kriterium eine Branche sein, innerhalb derer der Online-Shop Waren anbietet, bzw. der ein von dem Benutzer 12 gekauftes Produkt zuzuordnen ist. Weitere Kriterien können Informationen über den Benutzer selbst sein. Derartige Informationen werden beispielsweise von einem Online-Shop bei der Bestellung eines Produkts ermittelt und können Name, Adresse, Geschlecht und Alter umfassen.

Ist der zweite Informationsserver 6 als ein Online-Forum ausgebildet, so können die Kriterien die Oberbegriffe von Artikeln sein, die der Benutzer gelesen bzw. zu denen er etwas geschrieben hat. Viele Online-Foren setzen für die aktive Teilnahme eine Registrierung des Benutzers 12 voraus. Die dort angegebenen Daten können ebenfalls als Profilinformation verwendet werden.

Die Kriterien können auch eine Informationsart beschreiben. So kann beispielsweise eine Netzwerkseite in Abhängigkeit davon klassifiziert werden, ob auf der Netzwerkseite Textinformationen, Bildinformationen oder Videoinformationen dargestellt sind.

Fordert der Benutzer 12 weitere Netzwerkseiten 8 von dem zweiten Informationsserver 6 an, so können auch hiervon Profilinformationen an den Profilserver 13 übermittelt werden. Insbesondere ist es vorstellbar, auch ein Verhalten des Clients 9 bzw. des Benutzers 12 derart in die Profilinformationen einzubeziehen, dass beispielsweise die Zeitdauer zwischen der Anforderung zweier Netzwerkseiten 8 protokolliert wird. Aus dieser Zeitdauer kann dann geschlossen werden, ob der Benutzer 12 die zuerst an den Client 9 übermittelte Netzwerkseite 8 näher betrachtet haben kann, ob die dort dargestellte Information also von grundlegender Relevanz für den Benutzer 12 war, oder ob der Benutzer 12 nach nur sehr kurzer Zeitdauer eine weitere Netzwerkseite 8 von dem zweiten Informationsserver 6 angefordert hat, die zuerst übermittelte Netzwerkseite folglich von nur geringer Relevanz für den Benutzer 12 war. Hierbei können einzelne oder mehrere Netzwerkseiten 8 durch Links miteinander verknüpft sein, so dass der Benutzer 12 durch aktivieren eines auf einer Netzwerkseite 8 dargestellten Links automatisch eine weitere Netzwerkseite 8 von dem zweiten Informationsserver 6 anfordert. Verweilt der Benutzer 12 nur sehr kurz auf einer Netzwerkseite 8, bevor er die nächste Netzwerkseite 8 von dem zweiten Informationsserver 6 anfordert, und fordert der Benutzer 12 diese nächste Netzwerkseite 8 dadurch an, dass er einen auf der zuerst angeforderten Netzwerkseite 8 dargestellten Link aktiviert, so kann trotz der nur kurzen Verweildauer der zuerst angeforderten Netzwerkseite 8 eine gewisse Relevanz für den Benutzer 12 zugeordnet werden, da immerhin der dort dargestellte Link für den Benutzer 12 von Bedeutung war.

Insbesondere eine Auswertung der aufgrund der Aktivierung des Links angeforderten folgenden Netzwerkseite 8 kann Kriterien für die Erzeugung einer Profilinformation liefern.

In einem Schritt 103 erstellt der Profilserver 13 anhand der ihm von dem zweiten Informationsserver 6 übermittelten Profilinformation ein Profil 15, das den Client 9 bzw. dem Benutzer 12 zugeordnet werden kann. Das Erstellen des Profils 15 soll hier insbesondere auch die Aktualisierung eines bereits bestehenden Profils 15 umfassen. In Abhängigkeit von vorgebaren Regeln des Expertensystems 20 werden die für das Profil 15 vorliegenden Profilinformationen ausgewertet und zu einem Profil 15 verknüpft. Hierbei können insbesondere Verfahren aus der künstlichen Intelligenz angewendet werden. Das von dem Profilserver 13 erstellte Profil 15 wird in der Datenbank 14 abgespeichert.

In einem Schritt 104 fordert der Client 9 von dem ersten Informationsserver 3 eine Netzwerkseite 5 an. Dies kann beispielsweise wiederum dadurch geschehen, dass der Benutzer 12 mittels des Eingabegeräts 11 einen Link aktiviert, der auf einer dem Benutzer 12 bereits dargestellten Netzwerkseite 5, 8 dargestellt ist oder dadurch, dass der Benutzer 12 mittels des Eingabegeräts 11 eine URL eingibt. Die angeforderte Netzwerkseite kann beispielsweise die Start-Seite eines Online-Shops sein.

Zumindest der erste Informationsserver 3 ist derart ausgebildet, dass er eine von dem Client 9 angeforderte Netzwerkseite 5, also beispielsweise die Start-Seite, mit mindestens einer Zusatzinformation 18a versieht, also eine sogenannte personalisierte Start-Seite erzeugt. Zur Auswahl einer geeigneten Zusatzinformation 18a fordert der erste Informationsserver 3 zunächst von dem Profilserver 13 das dem Client 9 bzw. dem Benutzer 12 zugeordnete Profil 15 an. Dies erfolgt in dem Schritt 105. Der Profilserver 13 übermittelt daraufhin das angeorderte Profil 15 an den ersten Informationsserver 3.

Zur Auswahl des dem Benutzer 12 zugeordneten Profils 15, kann eine dem Benutzer 12 zugeordnete Kennung herangezogen werden. Eine derartige Kennung kann beispielsweise dadurch ermittelt werden, dass der Benutzer 12 sich durch die Eingabe einer user-id bei dem ersten Informationsserver 3 anmeldet. Ferner kann eine dem Client 9 zugeordnete Kennung ausgewertet werden. Hierbei können beispielsweise die in einem bei dem Client 9 abgespeicherten Cookie enthaltenen Informationen ausgewertet werden. Ferner kann beispielsweise eine dem Client 9 zugeordnete Gerätenummer ausgewertet werden.

Insbesondere wenn der Client 9 von verschiedenen Benutzern 12 verwendet wird, kann eine eindeutige Identifizierung des Benutzers 12 häufig nicht erfolgen, wenn dieser sich nicht mittels einer user-id bei dem ersten Informationsserver 3 anmeldet. Hier kann es besonders vorteilhaft sein, weitere Informationen bzw. Kennungen zur Identifizierung des Benutzers 12 und damit zur Auswahl des Profils 15 heranzuziehen. Derartige Informationen können beispielsweise durch Auswertung einer Verhaltensweise des Benutzers 12 erkannt werden. Beispielsweise wird eine Position des Zeigegeräts, also beispielsweise des Eingabegeräts 11, erkannt. Hierzu können beispielsweise die X-Y-Koordinaten des Zeigegeräts bezüglich des Displays 10 erkannt werden.

Insbesondere kann ein Bewegungsablauf des Zeigegeräts erfasst werden. Hierzu kann beispielsweise eine Folge von X-Y-Koordinaten erfasst werden. Vorzugsweise sind die X-Y-Koordinaten bezüglich einer Zeit erfasst, so dass beispielsweise auch eine Verweildauer erfasst werden kann.

Mittels dieser Informationen kann eine für den Benutzer typische Verhaltensweise erkannt werden und damit auf die Identität des Benutzers geschlossen werden, so dass das dem Benutzer 12 zugeordnete Profil 15 ausgewählt wird.

Die Aufnahme eines Verhaltens des Benutzers 12 kann ferner wiederum dazu benutzt werden, das dem Benutzer 12 zugeordnete Profil 15 zu aktualisieren.

Das Profil 15 kann selbst lediglich eine bestimmte Klasse von Benutzern beschreiben, die in einem oder mehreren Merkmalen oder Profilinformationen übereinstimmen. Das bedeutet, dass das Profil 15 nicht ausschließlich einem bestimmten Benutzer 12 zugeordnet sein muss. Durch das Erfassen des Verhaltens des Benutzers 12 kann folglich besonders einfach das Profil 15 ausgewählt werden, wenn dieses Profil 15 gerade ein solches Verhalten, bzw. eine bestimmte Klasse von Verhaltensweisen, beschreibt bzw. dieser zugeordnet ist.

In einem Schritt 106 wertet der erste Informationsserver 3 das von dem Profilserver 13 erhaltene Profil 15 aus. Hierzu kann beispielsweise in dem Profil 15 eine Angabe darüber enthalten sein, für welche Themen sich der Benutzer 12 in letzter Zeit besonders interessiert hat. Es ist ebenso vorstellbar, dass das Profil 15 Informationen darüber enthält, welche Produkte sich der Benutzer 12 bei einem Online-Shop in der vergangenen Zeit angesehen, zum Kauf vorgemerkt, gekauft oder gerade nicht gekauft hat.

In einem Schritt 107 fordert der erste Informationsserver 3 in Abhängigkeit von der in dem Schritt 106 durchgeführten Auswertung des Profils 15 von dem Zusatzinformationsserver 16 eine dem Profil 15 entsprechende Zusatzinformation 18a über das Kommunikationsnetzwerk 2 an. Hierbei wird davon ausgegangen, dass die in der Datenbank 17 abgespeicherten Zusatzinformationen 18a nach bestimmten, dem ersten Informationsserver 3 bekannten, Kriterien geordnet sind. Der Zusatzinformationsserver 16 wählt in Abhängigkeit von der Anfrage des ersten Informationsservers 3 die passende Zusatzinformation aus und übermittelt diese in einem Schritt 108 an den ersten Informationsserver 3.

In einem Schritt 109 veranlasst der erste Informationsserver 3, dass die ihm von dem Zusatzinformationsserver 16 übermittelte Zusatzinformation 18a in die von dem Client 9 angeforderte Netzwerkseite aufgenommen wird. Dies kann beispielsweise dadurch geschehen, dass in der Netzwerkseite 5 ein Bereich für die Aufnahme einer oder mehrerer Zusatzinformationen 18a vorgesehen ist. Die Zusatzinformation 18a kann beispielsweise ein Link zu einer anderen Netzwerkseite sein, die von dem ersten Informationsserver 3, von dem zweiten Informationsserver 6 oder einem anderen Informationsserver abrufbar ist. Hierbei kann vorgesehen sein, dass der Link mit einer textuellen oder graphischen Information ergänzt wird. Die Zusatzinformation ist beispielsweise ein sogenanntes Werbebanner, das mittels einer textuellen und/oder grafischen Darstellung für ein über einen Online-Shop zu beziehendes Produkt oder eine über einen Online-Shop vermittelte Dienstleistung wirbt.

In einem Schritt 110 wird die um die Zusatzinformation 18a angereicherte Netzwerkseite 5, also beispielsweise die von dem Client 9 angeforderte Start-Seite des ersten Informationsservers 3, über das Kommunikationsnetzwerk 2 an den Client 9 übermittelt.

In einem Schritt 111 wird das Verhalten des Clients 9 bzw. des Benutzers 12 nach der Übermittlung der Netzwerkseite 5 ausgewertet. Hierbei kann insbesondere berücksichtigt werden, wie der Benutzer 12 auf die Zusatzinformationen reagiert. Hierzu ist die Zusatzinformation 18a beispielsweise mit einem Link versehen, der von dem Benutzer 12 aktiviert werden kann. Eine derartige Aktivierung kann von dem ersten Informationsserver 3 protokolliert werden. Hieraus kann eine Profilinformation generiert werden, die in einem Schritt 112 ebenfalls an den Profilserver 13 zur Aktualisierung des Profils 15 des Clients 9 bzw. des Benutzers 12 herangezogen werden kann. Insbesondere kann das Verhalten des Benutzers 9 ebenfalls wieder anhand einer Position oder eines Bewegungsablaufs des dem Client zugeordneten Zeigegeräts erfolgen.

Gemäß einer anderen Ausführungsform wird abweichend von den Schritten 109 und 110 die Zusatzinformation nicht in die durch den Client 9 von dem ersten Informationsserver 3 angeforderte Netzwerkseite 5, 8 integriert, sondern die Zusatzinformation wird getrennt von der angeforderten Netzwerkseite 5, 8 an den Client 9 übermittelt. Der Client 9 weist hierzu geeignete Mittel zur Darstellung der Zusatzinformation auf. Dies kann beispielsweise dadurch realisiert sein, dass auf dem Client 9 eine Software implementiert abläuft, die eine Darstellung der Zusatzinformation ermöglicht. Eine Darstellung kann hierbei zusammen mit der von dem Informationsserver 3 übermittelten Netzwerkseite 5, 8 beispielsweise mittels des Browsers 19 erfolgen. Hierbei kann die Software beispielsweise in Form eines sogenannten plug-ins in den Browser 19 integriert sein. Eine Darstellung kann insbesondere auch in einem gesonderten Bereich des Browsers 19 erfolgen. Hierbei ist es vorstellbar, dass die Darstellung zeitunabhängig von der Darstellung der angeforderten Netzwerkseite 5, 8 erfolgt.

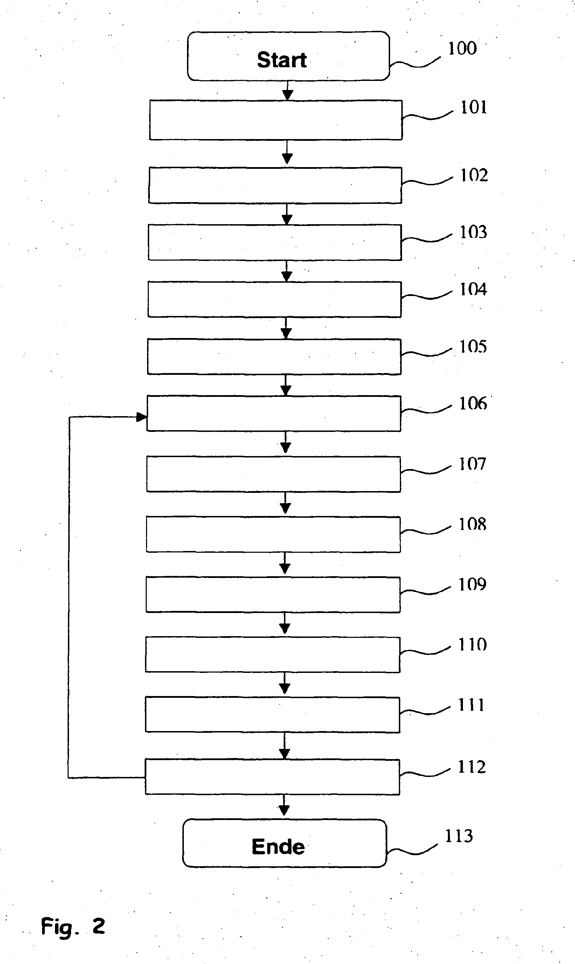

Es ist folglich vorstellbar, dass die Zusatzinformation 18a eine gewisse Zeit vor oder nach der Darstellung der Netzwerkseite 5, 8 auf dem Client 9 dargestellt wird. Beispielsweise kann sich eine Zeitverzögerung der Darstellung der Zusatzinformation 18a dadurch ergeben, dass die Zusatzinformation 18a erst wie in Figur 2 dargestellt ermittelt werden muss. Eine Zeitverzögerung der Darstellung der Zusatzinformation kann aber auch bewusst vorgegeben werden.

Insbesondere ist es vorstellbar, dass die Zusatzinformation nicht von dem ersten Informationsserver 3 an den Client 9 übermittelt wird, sondern direkt von dem Profilserver 13 oder dem Zusatzinformationsserver 16 an den Client 9 übermittelt wird und von dem Client 9 zusammen mit der Netzwerkseite 5, 8 oder unabhängig von dieser dem Benutzer 12 dargestellt wird.

Ist der zweite Informationsserver 6 als Suchmaschine realisiert, so kann durch die Eingabe eines Suchbegriffs durch den Benutzer 12 mittels des Client 9 und die Übermittlung des Suchbegriffs an den zweiten Informationsserver 6 eine Profilinformation erstellt werden, die von dem Profilserver 13 zur Erzeugung bzw. der Aktualisierung des Profils 15 verwendet wird. Fordert der Benutzer 12 zu einem späteren Zeitpunkt von dem ersten Informationsserver 3 eine Netzwerkseite 5 an, so kann eine Zusatzinformation 18a ausgewählt werden, die den vormalig verwendeten Suchbegriff berücksichtigt. Beispielsweise kann dem Benutzer 12 mittels des Clients 9 dann ein Werbebanner angezeigt werden, das in thematischer Beziehung zu dem vormalig eingegebenen Suchbegriff steht. Das Werbebanner kann dann in einem gesonderten Bereich des Browsers 19 dargestellt werden oder in die angeforderte Netzwerkseite 5 integriert werden.

Das in Figur 2 dargestellte Verfahren kann selbstverständlich in unregelmäßigen Wiederholungen einzelner Teile durchgeführt werden. Beispielsweise kann das Verfahren nach dem Schritt 112 wieder in dem Schritt 103 fortgesetzt werden. Insbesondere kann das Verfahren selbstverständlich zeitversetzt oder parallel mehrfach ausgeführt werden, wie es bei auf einem Client-Server-System realisierten Verfahren üblich ist. Hierzu können mehrere Benutzer 12 eine oder mehrere Anfragen an einen oder mehrere erste Informationsserver 3 oder zweite Informationsserver 6 senden.

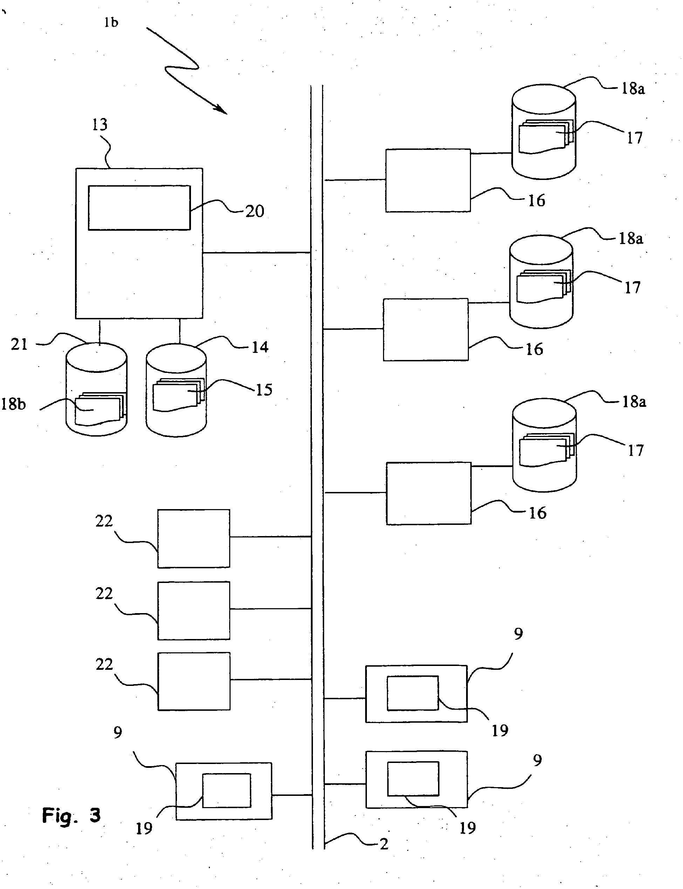

In Figur 3 ist ein weiteres Ausführungsbeispiel eines erfindungsgemäßen Client-Server-Systems 1b dargestellt.

Das in Figur 3 dargestellte Client-Server-System 1b weist ein Kommunikationsnetzwerk 2, einen Client 9 und einen Profilserver 13 auf. Der Client 9 ist entsprechend dem in Figur 1 dargestellten Client 9 ausgebildet. Dem Profilserver 13 ist eine Datenbank 15 zugeordnet, in der mindestens ein Profil 15 abgespeichert ist. Dem Profilserver 13 ist ferner eine Datenbank 21 zugeordnet, in der Zusatzinformationen 18b abgespeichert sind.

Das Client-Server-System 1b weist mehrere Zusatzinformationsserver 16 auf, denen jeweils eine Datenbank 17 zugeordnet ist, in der Zusatzinformationen 18a abgespeichert sind. Die Zusatzinformationsserver 16 sind mit dem Kommunikationsnetzwerk 2 verbunden.

Das Client-Server-System 1b weist mehrere Informationsserver 22 auf. Die Informationsserver 22 können die Funktionalität des in Figur 1 dargestellten ersten Informationsservers 3 oder des in Figur 1 dargestellten zweiten Informationsservers 6 aufweisen. Insbesondere kann mindestens ein Informationsserver 22 beide Funktionalitäten aufweisen. Das bedeutet, dass ein Informationsserver 22 sowohl Profilinformationen an den Profilserver 13 übermitteln kann, als auch Zusatzinformation 18a, 18b auf einer von dem Client 9 angeforderten Netzwerkseite 5, 8 darstellen kann. Jeder der Informationsserver 22 kann unabhängig von den anderen beispielsweise als ein Online-Shop, eine Suchmaschine, eine Produktsuchmaschine, ein Newsserver oder ein Online-Forum ausgebildet sein.

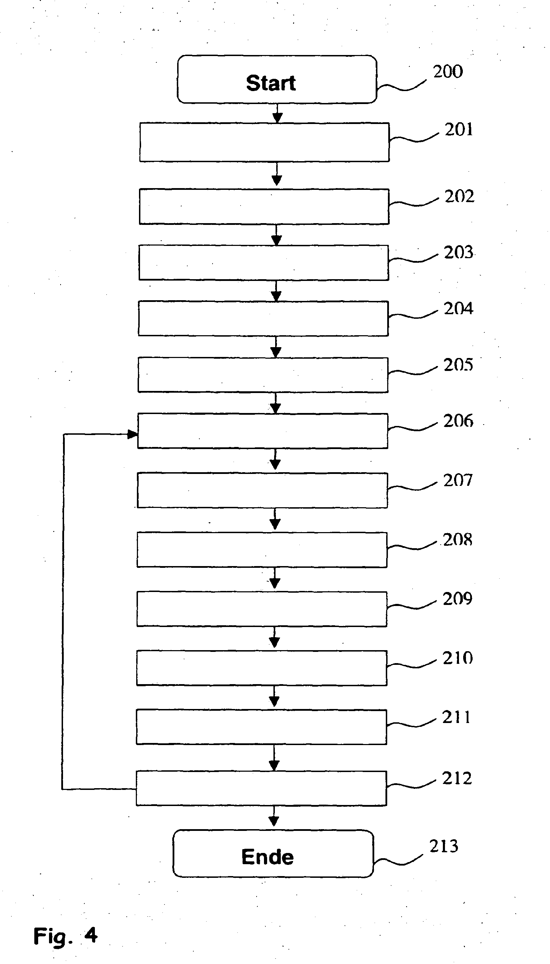

In Figur 4 ist das erfindungsgemäße Verfahren ausgehend von dem in Figur 3 dargestellten Client-Server-System 1b in einem weiteren Ausführungsbeispiel dargestellt.

Das in Figur 4 dargestellte Verfahren startet in einem Schritt 200. In einem Schritt 201 fordert der Client 9 von einem der Informationsserver 22 eine Netzwerkseite 5, 8 an.

In einem Schritt 202 veranlasst der Informationsserver 22 den Profilserver 13, eine Kennung zu generieren und bei dem Client 9 ein Cookie zu setzen. Dies kann beispielsweise dadurch geschehen, dass die Netzwerkseite 5, 8 durch Aktivieren eines auf einer zuvor angeforderten Netzwerkseite dargestellten Links erfolgt, wobei dem Link ein Verweis in Form einer URL zu dem Profilserver 13 zugeordnet ist und diese URL auf ein Skript verweist, so dass ein Aktivieren des Links eine Ausführung des auf dem Profilserver 13 abgespeicherten Skripts bewirkt. Das Abarbeiten dieses Skripts wiederum kann die Generierung eines Cookies zur Folge haben und dieses an den Client 9 übermitteln.

In einem Schritt 203 übermittelt der Informationsserver 22 eine Profilinformation an den Profilserver 13. Dies kann beispielsweise in Abhängigkeit von der zuvor von dem Client 9 bei dem Informationsserver 22 angeforderten Netzwerkseite 5, 8 erfolgen. Die Profilinformation kann beispielsweise ein bei dem Informationsserver 22 gekauftes Produkt, ein eingegebener Suchbegriff, ein Thema eines Online-Forums, eine Branche eines Online-Shops, Alter und Geschlecht des Benutzers 12, ein nicht gekauftes Produkt oder eine abgerufene Information sein.

In einem Schritt 204 erzeugt der Profilserver 13 ein neues Profil 15. Ist bereits ein Profil 15 für den Benutzer 12 vorhanden, so aktualisiert der Profilserver 13 das bestehende Profil 15. Dabei kann beispielsweise vorgesehen sein, dass alle oder bestimmte Profilinformationen, deren Erhebung länger als eine vorgegebene Zeitspanne zurückliegt, gelöscht und bei der Erzeugung bzw. Aktualisierung des Profils 15 nicht weiter berücksichtigt werden. Das erhöht beispielsweise die Adaptionsfähigkeit der Profilerzeugung und erlaubt es, auf geänderte Gewohnheiten, Bedürfnisse oder Interessen des Benutzers 12 flexibel zu reagieren. Das erzeugte Profil 15 wird dann in der Datenbank 14 abgespeichert. Die Datenbank 14 kann beispielsweise als ein Speicherbereich in einem Arbeitsspeicher ausgebildet sein.

In einem Schritt 205 fordert der Client 9 eine weitere Netzwerkseite 5, 8 von einem der Informationsserver 22 an. Dabei muss sich der Informationsserver 22 nicht von dem Informationsserver 22 unterscheiden, von dem der Client 9 zuvor eine Netzwerkseite 5, 8 angefordert hat. Diese Netzwerkseite ist beispielsweise eine einem der Informationsserver 22 zugeordnete Start-Seite.

In einem Schritt 206 wird analog zu dem Schritt 202 von dem Profilserver 13 eine Kennung erzeugt bzw. die dem Client 9 zugeordnete Kennung mittels einer Anforderung des bei dem Client 9 abgespeicherten Cookies ermittelt. Die Kennung kann selbstverständlich auch analog zu dem in Figur 2 dargestellten Verfahren durch Auswertung eines Verhaltens des Benutzers 12 oder durch Auswerten eines Bewegungsablaufs eines Zeigegeräts ermittelt werden.

In einem Schritt 207 wird analog zu dem Schritt 203 eine Profilinformation von dem Informationsserver 22, von dem der Client 9 gerade in dem Schritt 205 eine Netzwerkseite 5, 8 angefordert hat, an den Profilserver 13 übermittelt.

In einem Schritt 208 wird analog zu dem Schritt 204 ein Profil aktualisiert bzw. erzeugt.

In einem Schritt 209 wählt der Profilserver 13 eine Zusatzinformation aus, die auf der in dem Schritt 205 von dem Client 9 angeforderten Netzwerkseite 5, 8 dargestellt werden soll. Hierzu wertet der Profilserver 13 das bei diesem abgespeicherte und mittels der in dem Schritt 206 ermittelten Kennung dem Client 9 zugeordnete Profil 15 aus. Hierzu können aus dem Profil 15 Schlüsselwörter extrahiert werden, nach denen dann in den Zusatzinformationsservern 16 nach geeigneten Zusatzinformationen 18a gesucht werden kann. Ist dem Profilserver 13 eine Datenbank 21 zugeordnet, in der Zusatzinformationen 18b abgespeichert sind. Die Datenbank 21 ermöglicht es dem Profilserver 13, direkt in der Datenbank 21 nach Zusatzinformationen 18b suchen, die dem vorliegenden Profil 15 hinreichend entsprechen. Zur Bestimmung, ob eine Zusatzinformation 18a, 18b einem Profil 15 entspricht bzw. wie gut es entspricht, können bekannte Verfahren aus dem Bereich der Informationsgewinnung (information retrieval) und der automatisierten Klassifizierung (automatic classification; document clustering, keyword clustering) herangezogen werden, mittels derer beispielsweise sogenannte matching functions entwickelt und angewendet werden können.

Der Profilserver 13 kann beispielsweise als ein Tracking-System ausgebildet sein. Die in der Datenbank 21 abgespeicherten Zusatzinformation 18b können hierbei Werbeinformationen sein, die in Form von Werbebannern auf den von einem Informationsserver 22 an den Client 9 übermittelten Netzwerkseite 5, 8 dargestellt werden.

In einem Schritt 210 wird die ausgewählte Zusatzinformation 18a, 18b an den Informationsserver 22 übermittelt. Dieser stellt die ausgewählte Zusatzinformation auf der zu erstellenden Netzwerkseite 5, 8, beispielsweise der Start-Seite, dar. Dabei kann die Zusatzinformation insbesondere als ein Link zu einer weiteren Netzwerkseite ausgebildet sein, die von demselben oder einem anderen Informationsserver 22 bereitgestellt wird. Ist die Netzwerkseite 5, 8 eine Start-Seite, so kann damit die Erzeugung einer personalisierten Start-Seite realisiert werden. Das bedeutet, dass die auf der Start-Seite dargestellten Informationen in Abhängigkeit von dem Benutzer 12, der die Startseite anfordert, ausgewählt werden. Hierbei können nahezu alle auf der Start-Seite dargestellten Informationen als Zusatzinformationen ausgebildet sein. Beispielsweise ist lediglich noch ein Hinweis auf das Unternehmen, dem die Start-Seite zugeordnet ist, standardmäßig auf jeder Start-Seite enthalten. Alle weitere Informationen können in Form von erfindungsgemäß ausgewählten Zusatzinformationen 18a, 18b realisiert sein, sodass eine derartige Start-Seite speziell an den anfordernden Benutzer angepasst ist.

In einem Schritt 211 wird die mit der Zusatzinformation 18a, 18b versehene, von dem Client 9 in dem Schritt 205 angeforderte Netzwerkseite 5, 8, also beispielsweise die personalisierte Start-Seite, an den Client 9 über das Kommunikationsnetzwerk 2 übermittelt.

In einem Schritt 212 aktiviert der Benutzer 2 einen auf der in dem Schritt 211 übermittelten Netzwerkseite 5, 8 dargestellten Link. Dies kann beispielsweise ein mittels einer Zusatzinformation 18a, 18b dargestellter Link sein. Der Link ist derart ausgestaltet, dass eine Nachricht an den Profilserver 13 übermittelt wird, die eine Aktivierung dieses Links anzeigt. Dies kann von dem Profilserver 13 als eine Profilinformation ausgewertet werden und in dem Profil 15 entsprechend abgelegt werden.

Ist die Zusatzinformation 18a, 18b ein Werbebanner und führt der dadurch dargestellte Link zu einem Produkt eines Online-Shops, so kann der Kauf dieses Produkts ebenfalls als Profilinformation ausgewertet werden. Hierbei kann beispielsweise in dem Profil vermerkt werden, weiterhin Links zu dem Online-Shop anzuzeigen, beispielsweise um auf verfügbares Zubehör zu dem gekauften Produkt hinzuweisen. Gleichzeitig kann aber auch vorgesehen sein, genau keine weitere Werbebanner zu diesem Online-Shop auf einer von dem Client 9 angeforderten Netzwerkseite 5, 8 anzuzeigen, weil es beispielsweise höchst unwahrscheinlich ist, dass der Benutzer 12, beispielsweise aufgrund eines besonders kleinen Warensortiments des Online-Shops, in absehbarer Zeit nochmals einen Kauf bei dem Online-Shop zu tätigen beabsichtigt.

Das Verfahren kann dann in einem Schritt 213 enden. Vorzugsweise jedoch wird das Verfahren in dem Schritt 206 dadurch fortgesetzt, dass auch das weitere Verhalten des Benutzers 12 zur Erzeugung und Aktualisierung des dem Benutzer 12 zugeordneten Profils 15 ausgewertet wird.

Dadurch kann ein besonders aktuelles Profil 15 erhalten werden.

Ein erster konkreter Ablauf des erfindungsgemäßen Verfahrens könnte beispielsweise wie folgt aussehen:

Der Benutzer 12 baut mittels des als Notebook ausgebildeten Clients 9 eine Verbindung zu dem als das Internet ausgebildeten Kommunikationsnetzwerk 2 auf und kauft über den als Online-Shop ausgebildeten zweiten Informationsserver 6 ein Produkt. Bei dem Kauf wird eine Profilinformation erzeugt, die Informationen über das Produkt - beispielsweise die Bezeichnung des Produkts selbst und dessen Preis - über den Benutzer - beispielsweise dessen Alter und Geschlecht - und über den Kauf selbst - Zahlung mit Kreditkarte oder per Nachnahme sowie Datum des Kaufs - enthält.

Diese Profilinformation wird an den Profilserver 13 übermittelt, in geeigneter Weise aufbereitet und in der Datenbank 14 in Form eines Profils 15 abgespeichert.

Fordert der Benutzer 12 nun von dem als Suchmaschine ausgebildeten ersten Informationsserver 3 einige Stunden oder Tage später eine Netzwerkseite 5 an, so fordert der erste Informationsserver 3 von dem Profilserver 13 das dem Benutzer zugeordnete Profil 15 an. Zur Auswahl des Profils 15 benötigt der Profilserver 13 eine Identifizierung des Benutzers 12. Dies kann beispielsweise mittels der von dem Benutzer 12 bei dem Kauf übermittelten persönlichen Daten erfolgen.

Eine Identifizierung des Benutzers 12 kann auch dadurch erfolgen, dass eine dem Client 9 zugeordnete, eindeutige Gerätenummer, beispielsweise die Nummer einer in dem Client 9 vorhandenen sogenannten Netzwerkkarte, die bei der Anforderung einer Netzwerkseite 5, 9 an den Informationsserver 3, 6 automatisch übermittelt wird, von dem Informationsserver 3, 6 an den Profilserver 13 übermittelt wird und von diesem zusammen mit dem Profil 15 in der Datenbank 14 abgespeichert wird.

Eine Identifizierung des Benutzers 12 kann insbesondere auch dadurch erfolgen, dass der Client 9 bei dem Aufruf einer Netzwerkseite 5, 9 von dem Informationsserver 3, 6 dazu veranlasst wird, ein Cookie zu setzen. Die für das Setzen des Cookies notwendigen Informationen können von dem Informationsserver 3, 6 an den Client 9 übermittelt werden. Ein Cookie ist üblicherweise derart realisiert, dass es nur an den Informationsserver 3, 6 zurückgeschickt werden kann, der den Client 9 zum Setzen des Cookies veranlasst hat. Fordert der Client 9 erneut eine Netzwerkseite 5, 8 von dem Informationsserver 3, 6 an, so kann das Cookie zusammen mit der Anforderung von dem Client 9 an den Informationsserver 3, 6 übermittelt werden.

Besonders vorteilhaft ist es hierbei, wenn das Setzen des Cookies von dem Profilserver 13 veranlasst wird. Dies kann beispielsweise dadurch erreicht werden, dass der Informationsserver 3, 6, von dem der Client 9 eine Netzwerkseite anfordert, dem Profilserver 13 die Daten übermittelt, die für eine Übermittlung von Informationen an den Client 9 notwendig sind. Dies ist beispielsweise die Netzwerkadresse des Clients 9. Diese Adresse wird in Abhängigkeit des verwendeten Übertragungsprotokolls von dem Client 9 bei der Anforderung einer Netzwerkseite 5, 8 von dem Informationsserver 3, 6 an den Netzwerkseite 3, 6 übermittelt. Dies ermöglicht es dem Informationsserver 3, 6, die von dem Client 9 angeforderte Netzwerkseite 5, 8 an den Client 9 zu übermitteln.

Ist dem Profilserver 13 diese Adresse bekannt, kann er eine Nachricht an den Client 9 senden und diesen dadurch veranlassen, ein Cookie zu setzen. Dieses Cookie kann beispielsweise eine von dem Profilserver 13 erzeugte Kennung sein. Fordert der Benutzer 12 mittels des Client 9 von demselben oder einem anderen Informationsserver 3, 6 eine Netzwerkseite 5, 8 an, so wird der Profilserver 13 veranlasst, von dem Client 9 das bei diesem abgespeicherte Cookie anzufordern. Durch Auslesen des Cookies erhält der Profilserver 13 dann die dem Client 9 bzw. dem Benutzer 12 zugeordnete Kennung und kann anhand dieser das diesem zugeordnete Profil aus der Datenbank 14 auswählen.

Fordert der Client 9 beispielsweise eine Netzwerkseite 5, 8 von einem Informationsserver 3, 6 durch Aktivieren eines auf einer anderen Netzwerkseite dargestellten Links an, so kann vorgesehen sein, dass bei der Aktivierung des Links automatisch eine Nachricht an den Profilserver 13 gesendet wird und auf dem Profilserver 13 dadurch ein Skript ausgeführt wird, das den Profilserver 13 veranlasst, eine Nachricht an den Client 9 zu senden, damit der Client 9 eine in dieser Nachricht enthaltene Information, also beispielsweise die von dem Profilserver 13 erzeugte Kennung, in Form eines Cookies in einem dem Client 9 zugeordneten Speicherbereich abspeichert.

Fordert ein Informationsserver 3, 6 von dem Profilserver 13 ein Profil an, so fordert der Profilserver zunächst das bei dem Client 9 gesetzte Cookie an und kann anhand der in dem Cookie abgespeicherten Kennung das diesem zugeordnete Profil aus der Datenbank 14 auswählen.

In dem Profil kann nun vermerkt sein, welches Produkt der Benutzer 12 zuvor gekauft hat. Als Zusatzinformation kann dann beispielsweise ein Link zu einem Zubehör in die neu angeforderte Netzwerkseite integriert werden.

Hat der Benutzer beispielsweise einen Staubsauger gekauft, so kann eine Zusatzinformation in Form eines Links zu einem Anbieter von Ersatzbeuteln in eine nach dem Kauf angeforderte Netzwerkseite integriert werden.

Hat der Benutzer in einer Suchmaschine nach dem Begriffen "Hausbau" gesucht, können ihm Informationen von Anbietern von Baustoffen oder Tipps zum Hausbau als Zusatzinformation übermittelt werden.

Gemäß eines weiteren Ausführungsbeispiels wird das Profil 15 nicht in der dem Profilserver 13 zugeordneten Datenbank 15 abgespeichert, sondern direkt in dem Cookie, das bei dem dem Benutzer 12 zugeordneten Client 9 abgespeichert wird. Wird dem Profilserver eine neue Profilinformation von einem Informationsserver 22 übermittelt, so aktualisiert der Profilserver 13 das dem Client 9 zugeordnete Profil und veranlasst, dass das Profil durch das Setzen eines neuen, aktuellen Cookies bei dem Client 9 aktualisiert wird.

Insbesondere kann das Profil 15 einen bestimmten Benutzertyp bezeichnen, sodass folglich mehrere Benutzer 12 einem Profil 15 zugeordnet sein können und dadurch eine Klassifizierung der Benutzer 12 erreicht werden kann.

Ferner kann das erfindungsgemäße Verfahren selbstverständlich eine Vielzahl von Anforderungen von Netzwerkseiten von einem oder mehreren Informationsservern 3, 6, 22 umfassen, die erfolgen, sobald ein Profil 15 existiert. In diesen Fällen wird das erfindungsgemäße Verfahren also beispielsweise in dem Schritt 103 gestartet.

Die in den Figuren 2 und 4 dargestellten Ausführungsformen sind selbstverständlich lediglich beispielhafte Ausführungsformen. So ist es insbesondere möglich, mehrere Schritte zusammenzufassen, einzelne Schritte auszutauschen, oder gar aufzuheben und die Funktionalität einzelner Schritte zu verändern, solange der der Erfindung zugrundeliegende Erfindungsgedanke verwirklicht wird.

Beispielsweise kann vorgesehen sein, dass die in den Schritten 108 und 210 erfolgte Übermittlung der Zusatzinformation nicht an den ersten Informationsserver 3 oder an einen der Informationsserver 22 erfolgt, sondern direkt an den Client 9 übermittelt wird. Dies kann beispielsweise dadurch geschehen, dass der Profilserver 13 die Zusatzinformation 18b aus der ihm zugeordneten Datenbank 21 auswählt und diese an den Client 9 übermittelt, wo sie durch den Browser 19 mittels eines plug-ins in die darzustellende Netzwerkseite 5, 8 integriert wird oder in einem eigens dafür vorgesehenen Bereich dargestellt wird. Es ist auch möglich, dass der Profilserver 13 den Zusatzinformationsserver 16 veranlasst, die Zusatzinformation 18a, 18b direkt an den Informationsserver 3, 22 oder direkt an den Client 9 zu übermitteln.

Insbesondere kann auf dem Client 9 ein Softwareelement, bzw. eine Software, ablaufen, das automatisch eine Zusatzinformation bei dem Zusatzinformationsserver oder bei dem ersten Informationsserver anfordert. Eine derartige Software kann beispielsweise der Browser 19 sein. Insbesondere kann dies aber auch jede andere Art von Software sein. Hierbei ist es vorstellbar, dass eine Software dem Benutzer 12 besonders günstig oder kostenlos zum Gebrauch überlassen wird, die Software aber wenn Sie auf dem Client 9 installiert ist, automatisch zu vorgebbaren oder automatisch ermittelbaren Zeitpunkten Zusatzinformationen 18a, 18b von dem ersten Informationsserver 3 oder dem Zusatzinformationsserver 16 anfordert und diese dem Benutzer 12 auf dem Display 10 anzeigt. Ist diese Zusatzinformation 18a, 18b eine Werbung, so kann damit die Software finanziert werden. Gleichzeitig garantiert das erfindungsgemäße Verfahren zur Auswahl der Zusatzinformation 18a, 18b eine hohe Relevanz für den Benutzer 12 in Folge der Auswertung des hoch aktuellen Profils 15 bei der Auswahl der Zusatzinformation 18a, 18b. Insbesondere kann hierbei auch ein Verhalten des Benutzers 12 ausgewertet werden, so dass daran ein eventuelles Informationsbedürfnis des Benutzers 12 automatisch erkannt werden kann und daraufhin eine entsprechende Zusatzinformation 18a, 18b automatisch angefordert und an den Client 9 bzw. den Benutzer 12 übermittelt wird.

## Patentansprüche

1. Verfahren zur Übermittlung von Informationen von einem ersten Informationsserver (3) an einen Client (9),
wobei
- der erste Informationsserver (3) und der Client (9) mit einem Kommunikationsnetzwerk (2) verbunden sind,
- dem Client (9) ein Profil (15) zugeordnet wird,
- mindestens ein Zusatzinformationsserver (16) mit dem Kommunikationsnetzwerk (2) verbunden ist,
- durch den Zusatzinformationsserver (16) mindestens eine Zusatzinformation (18a; 18b) zum Abruf bereitgestellt wird,
- mittels des Client (9) von dem ersten Informationsserver (3) eine Netzwerkseite (5) über das Kommunikationsnetzwerk (2) angefordert wird,
- in Abhängigkeit von dem dem Client (9) zugeordneten Profil (15) eine Zusatzinformation (18a; 18b) ausgewählt wird; und
- die angeforderte Netzwerkseite (5) und die Zusatzinformation (18a; 18b) an den Client (9) übermittelt werden;
**dadurch gekennzeichnet, dass** mindestens ein zweiter Informationsserver (6) mit dem Kommunikationsnetzwerk (2) verbunden ist, das Profil (15) von einem mit dem Kommunikationsnetzwerk (2) verbundenen Profilserver (13) erstellt wird und zur Erstellung des Profils mindestens eine Profilinformation ausgewertet wird,
wobei die Profilinformation in Abhängigkeit mindestens einer Eigenschaft einer von dem zweiten Informationsserver an den Client (9) übermittelten Netzwerkseite (8) ermittelt wird.

2. Verfahren nach Anspruch 1, **dadurch gekennzeichnet, dass** der erste Informationsserver (3) und/oder der zweite Informationsserver (6) als eine Suchmaschine, eine Produktsuchmaschine, ein Online-Shop, ein Online-Forum oder ein Newsserver ausgebildet ist.

3. Verfahren nach einem der vorangehenden Ansprüche, **dadurch gekennzeichnet, dass** der Profilinformation eine Bedingung zugeordnet wird und die Profilinformation für die Erstellung des Profils (15) nur dann berücksichtigt wird, wenn die Profilinformation die Bedingung erfüllt.

4. Verfahren nach einem der vorangehenden Ansprüche, **dadurch gekennzeichnet, dass** der von dem Client (9) bei dem ersten Informationsserver (3) angeforderten Netzwerkseite (5) mindestens eine Eigenschaft zugeordnet ist und die Zusatzinformation (18a; 18b) in Abhängigkeit von einer Auswertung dieser Eigenschaft ausgewählt wird.

5. Verfahren nach einem der vorangehenden Ansprüche, **dadurch gekennzeichnet, dass** die mindestens eine Eigenschaft der von dem zweiten Informationsserver an den Client (9) übermittelten Netzwerkseite (8) oder der von dem Client (9) bei dem ersten Informationsserver (3) angeforderten Netzwerkseite (5) einen Inhalt, einen Themenbereich, einen Ursprung, eine Zeitdauer, eine durchgeführte Aktion oder eine nicht durchgeführte Aktion beschreibt.

6. Verfahren nach einem der vorangehenden Ansprüche,
**dadurch gekennzeichnet, dass**
- der erste Informationsserver (3) das Profil (15) von dem Profilserver (13) anfordert, der Profilserver (13) das Profil (15) an den ersten Informationsserver (3) übermittelt und der erste Informationsserver (3) die Zusatzinformation (18a; 18b) auswählt;
- der erste Informationsserver (3) von dem Profilserver (13) die Zusatzinformation (18a; 18b) anfordert, wobei der Profilserver (13) die Zusatzinformation (18a; 18b) auswählt; oder
- der Profilserver (13) das Profil (15) an den Zusatzinformationsserver (16) übermittelt und der Zusatzinformationsserver (16) die Auswahl der Zusatzinformation (18a; 18b) in Abhängigkeit von dem Profil (15) durchführt.

7. Verfahren nach einem der vorangehenden Ansprüche, **dadurch gekennzeichnet, dass** zur Zuordnung einer Profilinformationen zu einem Profil (15) mindestens eine dem Client (9) und/oder dem Benutzer (12) zugeordnete Kennung ausgewertet wird oder dass das für die Auswahl der Zusatzinformation (18a; 18b) zu verwendende Profil (15) durch Auswertung mindestens einer dem Client (9) und/oder dem Benutzer (12) zugeordneten Kennung ausgewählt wird.

8. Verfahren nach Anspruch 7, **dadurch gekennzeichnet, dass** die Kennung aus einem Cookie, einer Gerätenummer, einer Softwarenummer oder einer Einwahlnummer gebildet wird.

9. Verfahren nach Anspruch 7 oder 8, **dadurch gekennzeichnet, dass** ein Verhalten des Benutzers ausgewertet wird und die Kennung in Abhängigkeit von der Auswertung des Verhaltens gebildet wird.

10. Verfahren nach Anspruch 9, **dadurch gekennzeichnet, dass** das verhalten in Abhängigkeit mindestens einer Position eines dem Client (9) zugeordneten Zeigegeräts ermittelt wird.

11. Verfahren nach Anspruch 9 oder 10, **dadurch gekennzeichnet, dass** das Verhalten in Abhängigkeit eines Bewegungsablaufs eines dem Client (9) zugeordneten Zeigegeräts ermittelt wird.

12. Verfahren nach einem der Ansprüche 9 bis 11, **dadurch gekennzeichnet, dass** von dem Verhalten eine Profilinformation abgeleitet und in dem Profil (15) abgespeichert wird.

13. Verfahren nach einem der vorangehenden Ansprüche, **dadurch gekennzeichnet, dass** für die Auswahl einer darzustellenden Zusatzinformation (18a; 18b) mindestens ein der Zusatzinformation (18a; 18b) zugeordnetes Merkmal ausgewertet wird, wobei das Merkmal eine Zeit, eine Zeitspanne, eine Branche, einen Themenbereich, eine Anzahl von Aktivierungen, eine Anzahl von Leads, eine Anzahl von Sales oder eine Conversion beschreibt.

14. Verfahren nach einem der vorangehenden Ansprüche, **dadurch gekennzeichnet, dass** der Client (9) ein Softwareelement aufweist, die ausgewählte Zusatzinformation (18a; 18b) an das Softwareelement über das Kommunikationsnetzwerk (2) übermittelt wird und mittels des Softwareelements eine Darstellung der Zusatzinformation (18a; 18b) veranlasst wird.

15. Verfahren nach einem der vorangehenden Ansprüche, **dadurch gekennzeichnet, dass** die von dem ersten Informationsserver (3) oder von dem zweiten Informationsserver (6) angeforderte Netzwerkseite (8) in Form eines RSS-Feeds an den Client (9) übermittelt wird.

16. Verfahren nach einem der vorangehenden Ansprüche, **dadurch gekennzeichnet, dass** unabhängig von der Anforderung der Netzwerkseite (5) bei dem ersten Informationsserver (3) automatisch eine Übermittlung einer Zusatzinformation (18a, 18b) an den Client (9) veranlasst wird.

17. Verfahren nach einem der vorangehenden Ansprüche, **dadurch gekennzeichnet, dass** der Client (9) von dem ersten Informationsserver (3) eine Start-Seite anfordert und der Informationsserver die ausgewählte Zusatzinformation (18a; 18b) als Bestandteil der Start-Seite an den Client (9) übermittelt.

18. Verfahren nach einem der vorangehenden Ansprüche, **dadurch gekennzeichnet, dass** der Client (9) von dem ersten Informationsserver (3) eine Start-Seite anfordert und der erste Informationsserver (3) der Start-Seite mindestens einen der ausgewählten Zusatzinformation (18a; 18b) zugeordneten Link hinzufügt und die Start-Seite an den Client (9) übermittelt wird.

19. Verfahren nach einem der vorangehenden Ansprüche, **dadurch gekennzeichnet, dass** der erste Informationsserver (3) als ein ein Produkt zum Kauf anbietender Online-Shop ausgebildet ist, ein Kauf des Produkts mehrere Aktionen umfasst, der Kauf des Produkts eingeleitet wird, die Zusatzinformation (18a, 18b) ein weiteres Produkt betrifft, der Kauf des weiteren Produkts eingeleitet wird und bei dem Kauf des weiteren Produkts mindestens eine Aktion zusammen mit der entsprechenden, für den Kauf des von dem Online-Shop angebotenen Produkts durchzuführenden Aktion, durchgeführt wird, wobei die Aktion insbesondere eine Bestellung, eine Bestellbestätigung, eine Bezahlung oder eine Versendung ist.

20. Client-Server-System (1a; 1b) umfassend einen einem Benutzer (12) zugeordneten Client, einen ersten Informationsserver, einen Zusatzinformationsserver (16) und ein Kommunikationsnetzwerk, mittels dessen eine Kommunikation zwischen dem Client (9) und dem ersten Informationsserver (3) möglich ist, wobei
- das Client-Server-System (1a; 1b) Mittel zur Zuordnung eines Profils zu dem Client (9) aufweist,
- der Zusatzinformationsserver (16) mit dem Kommunikationsnetzwerk (2) verbunden ist,
- der Zusatzinformationsserver (16) mindestens eine Zusatzinformation (18a; 18b) zum Abruf bereitstellt,
- der Client (9) Mittel aufweist, um von dem ersten Informationsserver (3) eine Netzwerkseite (5) über das Kommunikationsnetzwerk (2) anzufordern,
- das Client-Server-System (1a; 1b) Mittel aufweist, um eine Zusatzinformation (18a; 18b) in Abhängigkeit von dem dem Client (9) zugeordneten Profil (15) auszuwählen; und
- das Client-Server-System (1a; 1b) Mittel aufweist, um die angeforderte Netzwerkseite (5) mit der Zusatzinformation (18a; 18b) von dem ersten Informationsserver (3) an den Client (9) zu übermitteln,
**dadurch gekennzeichnet, dass** das Client-Server-System (1a; 1b) Mittel zur Durchführung eines Verfahrens nach einem der Ansprüche 1 bis 19 aufweist.

21. Profilserver (13) in einem Client-Server-System (1a; 1b), wobei,
- das Client-Server-System (1a; 1b) einen einem Benutzer (12) zugeordneten Client, einen ersten Informationsserver, einen Zusatzinformationsserver (16) und ein Kommunikationsnetzwerk (2) umfasst
- der Profilserver (13) Mittel zur Zuordnung eines Profils zu dem Client (9) aufweist,
- der Zusatzinformationsserver (16) mit dem Kommunikationsnetzwerk (2) verbunden ist,
- der Zusatzinformationsserver (16) mindestens eine Zusatzinformation (18a; 18b) zum Abruf bereitstellt,
- der Client (9) Mittel aufweist, um von dem ersten Informationsserver (3) eine Netzwerkseite (5) über das Kommunikationsnetzwerk (2) anzufordern,
- das Client-Server-System (1a; 1b) Mittel aufweist, um eine Zusatzinformation (18a; 18b) in Abhängigkeit von dem dem Client (9) zugeordneten Profil (15) auszuwählen; und
- das Client-Server-System (1a; 1b) Mittel aufweist, um die angeforderte Netzwerkseite (5) mit der Zusatzinformation (18a; 18b) von dem ersten Informationsserver (3) an den Client (9) zu übermitteln,
**dadurch gekennzeichnet, dass** der Profilserver (13) Mittel zur Ausführung eines Verfahrens nach einem der Ansprüche 1 bis 19 aufweist.

22. Computerprogramm, das auf einem Client-Server-System (1a; 1b), insbesondere auf einem Client (9) und/oder auf einem Server ablauffähig ist, **dadurch gekennzeichnet, dass** das Computerprogramm derart programmiert ist, dass ein Verfahren nach einem der Ansprüche 1 bis 19 durchgeführt wird, wenn das Computerprogramm auf dem Client-Server-System (1a; 1b) ausgeführt wird.

23. Computerprogramm nach Anspruch 22, **dadurch gekennzeichnet, dass** das Computerprogramm auf einem Speicherelement abgespeichert ist, wobei das Speicherelement als Diskette, Compact Disk (CD), Digital Versatile Disk (DVD), und/oder mindestens ein mindestens einer Komponente des Client-Server-Systems (1a; 1b) zugeordneter Speicherbereich ausgebildet ist.

## Claims

1. Method of transmitting information from a first server (3) providing information to a client (9) in which
- the first server (3) providing information and the client (9) are connected to a communications network (2),
- a profile (15) is assign to the client (9),
- at least one server (16) providing additional information is connected to the communications network (2),
- at least one item of additional information (18a, 18b) is made available by the server (16) providing additional information for call-up,
- a network site (5) is requested from the first server (3) providing information, over the communications network (2), by means of the client (9),
- an item of additional information (18a, 18b) is selected as a function of the profile (15) assigned to the client (9), and
- the network site (5) requested and the item of additional information (18a, 18b) are transmitted to the client (9),
**characterised in that** at least one second server (6) providing information is connected to the communications network (2), the profile (15) is created by a profile server (13) connected to the communications network (2), and at least one item of profile information is analysed to allow the profile to be created, the item of profile information being determined as a function of at least one attribute of a network site (8) which is transmitted to the client (9) from the second server providing information.

2. Method according to claim 1, **characterised in that** the first server (3) providing information and/or the second server providing information (6) is in the form of a search engine, a product search engine, an on-line shop, an on-line forum or a news server.

3. Method according to either of the foregoing claims, **characterised in that** a condition is assigned to the item of profile information and account is only taken of the item of profile information for the purpose of creating the profile (15) if the item of profile information satisfies the condition.

4. Method according to one of the foregoing claims, **characterised in that** the network site (5) which is requested by the client (9) from the first server (3) providing information has assigned to it at least one attribute, and the item of additional information (18a, 18b) is selected as a function of an analysis of this attribute.

5. Method according to one of the foregoing claims, **characterised in that** the at least one attribute of the network site (8) which is transmitted to the client (9) from the second server providing information or of the network site (5) which is requested by the client (9) from the first server (3) providing information defines content, a subject area, an origin, a duration, an action which has been performed or an action which has not been performed.

6. Method according to one of the foregoing claims,
**characterised in that**
- the first server (3) providing information requests the profile (15) from the profile server (13), the profile server (13) transmits the profile (15) to the first server (3) providing information, and the first server (3) providing information selects the item of additional information (18a, 18b),
- the first server (3) providing information requests the item of additional information (18a, 18b) from the profile server (13), in which case the profile server (13) selects the item of additional information (18a, 18b), or
- the profile server (13) transmits the profile (15) to the server (16) providing additional information and the server (16) providing additional information performs the selection of the item of additional information (18a, 18b) as a function of the profile (15).

7. Method according to one of the foregoing claims, **characterised in that**, to allow an item of profile information to be assigned to a profile (15), at least one identifier assigned to the client (9) and/or the user (12) is analysed, or **in that** the profile (15) which is to be used for the selection of the item of additional information (18a, 18b) is selected by analysing at least one identifier which is assigned to the client (9) and/or the user (12).

8. Method according to claim 7, **characterised in that** the identifier is formed by a cookie, a device number, a software number or a number for dialling-in.

9. Method according to claim 7 or 8, **characterised in that** behaviour of the user is analysed and the identifier is formed as a function of the analysis of the behaviour.

10. Method according to claim 9, **characterised in that** the behaviour is determined as a function of at least one position of a pointing device assigned to the client (9) .

11. Method according to claim 9 or 10, **characterised in that** the behaviour is determined as a function of a pattern of movement of a pointing device assigned to the client (9).

12. Method according to one of claims 9 to 11, **characterised in that** an item of profile information is derived from the behaviour and is stored in the profile (15).

13. Method according to one of the foregoing claims, **characterised in that**, to allow an item of additional information (18a, 18b) which is to be displayed to be selected, at least one feature assigned to the item of additional information is analysed, the feature defining a time, a time-span, a sector, a subject area, a number of activations, a number of leads, a number of sales or a conversion.

14. Method according to one of the foregoing claims, **characterised in that** the client (9) has a software element, the item of additional information (18a, 18b) selected is transmitted to the software element over the communications network (2), and display of the item of additional information (18a, 18b) is caused by means of the software element.

15. Method according to one of the foregoing claims, **characterised in that** the network site (8) requested by the first server (3) providing information or by the second server providing information (6) is transmitted to the client (9) in the form of an RSS feed.

16. Method according to one of the foregoing claims, **characterised in that** transmission of an item of additional information (18a, 18b) to the client (9) is caused automatically independently of the request for the network site (5) to the first server (3) providing information.

17. Method according to one of the foregoing claims, **characterised in that** the client (9) requests a home page from the first server (3) providing information and the server providing information transmits the item of additional information (18a, 18b) which is selected to the client (9) as part of the home page.

18. Method according to one of the foregoing claims, **characterised in that** the client (9) requests a home page from the first server (3) providing information and the first server (3) providing information adds at least one link assigned to the item of additional information (18a, 18b) which is selected to the home page and transmits the home page to the client (9).

19. Method according to one of the foregoing claims, **characterised in that** the first server (3) providing information takes the form of an on-line shop which offers a product for purchasing, a purchase of the product comprises a plurality of actions, the purchase of the product is initiated, the item of additional information (18a, 18b) relates to a further product, the purchase of the further product is initiated, and in the course of the purchase of the further product at least one action is performed together with the corresponding action which has to be performed for the purchase of the product offered by the on-line shop, the action being in particular ordering, confirming an order, paying or dispatching.

20. Client-server system (1a, 1b) comprising a client which is assigned to a user (12), a first server providing information, a server (16) providing additional information and a communications network by means of which communication is possible between the client (9) and the first server (3) providing information, in the case of which
- the client-server system (1a, 1b) has means for assigning a profile to the client (9),
- the server (16) providing additional information is connected to a communications network (2),
- the server (16) providing additional information makes at least one item of additional information (18a, 18b) available for call-up,
- the client (9) has means for requesting a network site (5) from the first server (3) providing information over the communications network (2),
- the client-server system (1a, 1b) has means for selecting an item of additional information (18a, 18b) as a function of the profile (15) assigned to the client (9), and
- the client-server system (1a, 1b) has means for transmitting the network site (5) requested, together with the item of additional information (18a, 18b), from the first server (3) providing information to the client (9),
**characterised in that** the client-server system (1a, 1b) has means for carrying out a method according to one of claims 1 to 19.

21. Profile server (13) in a client-server system (1a, 1b), in the case of which
- the client-server system (1a, 1b) comprises a client assigned to a user (12), a first server providing information, a server (16) providing additional information and a communications network (2),
- the profile server (13) has means for assigning a profile to the client (9),
- the server (16) providing additional information is connected to the communications network (2),
- the server (16) providing additional information makes at least one item of additional information (18a, 18b) available for call-up,
- the client (9) has means for requesting a network site (5) from the first server (3) providing information over the communications network (2),
- the client-server system (1a, 1b) has means for selecting an item of additional information (18a, 18b) as a function of the profile (15) assigned to the client (9), and
- the client-server system (1a, 1b) has means for transmitting the network site (5) requested, together with the item of additional information (18a, 18b), from the first server (3) providing information to the client (9),
- **characterised in that** the profile server (13) has means for carrying out a method according to one of claims 1 to 19.

22. Computer program which can be run on a client-server system (1a, 1b) and in particular on a client (9) and/or on a server, **characterised in that** the computer program is so programmed that a method according to one of claims 1 to 19 is carried out when the computer program is run on the client-server system (1a, 1b).

23. Computer program according to claim 22, **characterised in that** the computer program is stored on a storage member, the storage member taking the form of a floppy disc, compact disc (CD) or digital versatile disc (DVD), and/or at least one storage region is formed which is assigned to at least one component of the client-server system (1a, 1b).

## Revendications

1. Procédé de transmission d'informations depuis un premier serveur d'informations (3) vers un client (9), dans lequel
- le premier serveur d'informations (3) et le client (9) sont reliés à un réseau de communication (2),
- un profil (15) est associé au client (9),
- au moins un serveur d'informations supplémentaire (16) est relié au réseau de communication (2),
- au moins une information supplémentaire (18a ; 18b) est préparée par le serveur d'informations supplémentaire (16) pour être consultée,
- une page réseau (5) est demandée par le premier serveur d'informations (3) au moyen du client (9) via le réseau de communication (2),
- une information supplémentaire (18a ; 18b) est sélectionnée en fonction du profil (15) associé au client (9) ; et
- la page réseau (5) demandée et l'information supplémentaire (18a ; 18b) sont transmises vers le client (9) ;
**caractérisé en ce qu'**au moins un deuxième serveur d'informations (6) est relié au réseau de communication (2), le profil (15) est établi par un serveur de profils (13) relié au réseau de communication (2) et au moins une information sur le profil est analysée pour établir le profil, ladite information sur le profil étant déterminée en fonction d'au moins une propriété d'une page réseau (8) transmise vers le client (9) par l'intermédiaire du deuxième serveur d'informations.

2. Procédé selon la revendication 1, **caractérisé en ce que** le premier serveur d'informations (3) et/ou le deuxième serveur d'informations (6) sont configurés comme un moteur de recherche, un moteur de recherche de produits, une boutique en ligne, un forum en ligne ou un serveur de nouvelles.

3. Procédé selon l'une quelconque des revendications précédentes, **caractérisé en ce qu'**une condition est associée à l'information sur le profil, et l'information sur le profil n'est prise en compte pour la création d'un profil (15) que si l'information sur le profil remplit la condition.

4. Procédé selon l'une quelconque des revendications précédentes, **caractérisé en ce qu'**au moins une propriété est associée à la page réseau (5) demandée par le client (9) auprès du premier serveur d'informations (3), et l'information supplémentaire (18a ; 18b) est sélectionnée en fonction d'une analyse de ladite propriété.

5. Procédé selon l'une quelconque des revendications précédentes, **caractérisé en ce que** ladite au moins une propriété de la page réseau (8), transmise vers le client (9) par le deuxième serveur d'informations ou la page réseau (5) demandée par le client (9) auprès du premier serveur d'informations (3) décrit un contenu, une zone de thèmes, une origine, un intervalle de temps, une action exécutée ou une action non exécutée.

6. Procédé selon l'une quelconque des revendications précédentes, **caractérisé en ce que**
- le premier serveur d'informations (3) demande le profil (15) auprès du serveur de profils (13), ledit serveur de profils (13) transmet le profil (15) au premier serveur d'informations (3), et ledit premier serveur d'informations (3) sélectionne l'information supplémentaire (18a ; 18b) ;
- le premier serveur d'informations (3) demande l'information supplémentaire (18a ; 18b) auprès du serveur de profils (13), ledit serveur de profils (13) sélectionnant l'information supplémentaire (18a ; 18b) ; ou
- le serveur de profils (13) transmet le profil (15) vers le serveur d'informations supplémentaire (16) et ledit serveur d'informations supplémentaire (16) effectuer la sélection de l'information supplémentaire (18a ; 18b) en fonction du profil (15) .

7. Procédé selon l'une quelconque des revendications précédentes, **caractérisé en ce que**, pour associer une information sur le profil à un profil (15), au moins un signe distinctif associé au client (9) et/ou à l'utilisateur (12) est analysé ou **en ce que**, pour sélectionner l'information supplémentaire (18a ; 18b) pour le profil (15) à utiliser, au moins un signe distinctif associé au client (9) et/ou à l'utilisateur (12) est sélectionné moyennant une analyse.

8. Procédé selon la revendication 7, **caractérisé en ce que** le signe distinctif est formé par un cookie, un numéro d'appareil, un numéro de logiciel ou un numéro d'entrée en communication.

9. Procédé selon la revendication 7 ou 8, **caractérisé en ce qu'**un comportement de l'utilisateur est analysé et le signe distinctif est formé en fonction de l'analyse du comportement.

10. Procédé selon la revendication 9, **caractérisé en ce que** le comportement est déterminé en fonction d'au moins une position d'un pointeur associé au client (9).

11. Procédé selon la revendication 9 ou 10, **caractérisé en ce que** le comportement est déterminé en fonction du déroulement d'un mouvement d'un pointeur associé au client (9).

12. Procédé selon l'une quelconque des revendications 9 à 11, **caractérisé en ce qu'**une information sur le profil est dérivée du comportement et est stockée dans le profil (15).

13. Procédé selon l'une quelconque des revendications précédentes, **caractérisé en ce que** pour la sélection d'une information supplémentaire (18a ; 18b) à représenter, au moins une caractéristique associée à l'information supplémentaire (18a ; 18b) est analysée, ladite caractéristique définissant une durée, un intervalle de temps, une branche, un domaine thématique, un nombre d'activations, un nombre d'articles de tête (leads), un nombre de transactions (sales) ou une conversion.

14. Procédé selon l'une quelconque des revendications précédentes, **caractérisé en ce que** le client (9) possède un élément logiciel, l'information supplémentaire (18a ; 18b) sélectionnée est transmise à l'élément logiciel via le réseau de communication (2) et une représentation de l'information supplémentaire (18a ; 18b) est ordonnée par l'intermédiaire de l'élément logiciel.

15. Procédé selon l'une quelconque des revendications précédentes, **caractérisé en ce que** la page réseau (8), demandée par le premier serveur d'informations (3) ou par le deuxième serveur d'informations (6), est transmise vers le client (9) sous la forme d'un fil de syndication.

16. Procédé selon l'une quelconque des revendications précédentes, **caractérisé en ce qu'**une transmission d'une information supplémentaire (18a ; 18b) vers le client (9) est ordonnée automatiquement, indépendamment de la demande de la page réseau (5) auprès du premier serveur d'informations (3).

17. Procédé selon l'une quelconque des revendications précédentes, **caractérisé en ce que** le client (9) demande auprès du premier serveur d'informations (3) une page d'accueil, et l'information supplémentaire (18a ; 18b) sélectionnée est transmise vers le client (9) en tant que partie intégrante de la page d'accueil par le serveur d'informations.

18. Procédé selon l'une quelconque des revendications précédentes, **caractérisé en ce que** le client (9) demande auprès du premier serveur d'informations (3) une page d'accueil, et le premier serveur d'informations (3) ajoute à la page d'accueil au moins un lien associé à l'information supplémentaire (18a ; 18b) sélectionnée, et la page d'accueil est transmise vers le client (9).

19. Procédé selon l'une quelconque des revendications précédentes, **caractérisé en ce que** le premier serveur d'informations (3) est configuré sous la forme d'une boutique en ligne, proposant l'achat de produits, un achat du produit englobe plusieurs actions, l'achat du produit est déclenché, l'information supplémentaire (18a ; 18b) concerne un autre produit, l'achat de l'autre produit est déclenché et lors de l'achat de l'autre produit au moins une action est exécutée conjointement avec l'action correspondante à exécuter pour l'achat du produit proposé par la boutique en ligne, l'action étant en particulier une commande, une confirmation de commande, un paiement ou une expédition.

20. Système client-serveur (1a ; 1b) comportant un client associé à un utilisateur (12), un premier serveur d'informations, un serveur d'informations supplémentaire (16) et un réseau de communication, au moyen duquel une communication est possible entre le client (9) et le premier serveur d'informations (3), sachant que
- le système client-serveur (1a ; 1b) comporte des moyens pour associer un profil au client (9),
- le serveur d'informations supplémentaire (16) est relié au réseau de communication (2),
- le serveur d'informations supplémentaire (16) met à disposition au moins une information supplémentaire (18a ; 18b) destinée à être consultée,
- le client (9) comporte des moyens pour demander auprès du premier serveur d'informations (3) une page réseau (5) via le réseau de communication (2),
- le système client-serveur (1a ; 1b) comporte des moyens pour sélectionner une information supplémentaire (18a ; 18b) en fonction du profil (15) associé au client (9) ; et
- le système client-serveur (1a ; 1b) comporte des moyens pour transmettre vers le client (9) la page réseau (5) demandée avec l'information supplémentaire (18a ; 18b) auprès du premier serveur d'informations (3),
**caractérisé en ce que** le système client-serveur (1a ; 1b) comporte des moyens pour la mise en oeuvre d'un procédé selon l'une des revendications 1 à 19.

21. Serveur de profils (13) dans un système client-serveur (1a ; 1b), sachant que
- le système client-serveur (1a ; 1b) comporte un client associé à un utilisateur (12), un premier serveur d'informations, un serveur d'informations supplémentaire (16) et un réseau de communication (2),
- le serveur de profils (13) comporte des moyens pour associer un profil au client (9),
- le serveur d'informations supplémentaire (16) est relié au réseau de communication (2),
- le serveur d'informations supplémentaire (16) met à disposition au moins une information supplémentaire (18a ; 18b) destinée à être consultée,
- le client (9) comporte des moyens pour demander auprès du premier serveur d'informations (3) une page réseau (5) via le réseau de communication (2),
- le système client-serveur (1a ; 1b) comporte des moyens pour sélectionner une information supplémentaire (18a ; 18b) en fonction du profil (15) associé au client (9) ; et
- le système client-serveur (1a ; 1b) comporte des moyens pour transmettre vers le client (9) la page réseau (5) demandée avec l'information supplémentaire (18a ; 18b) auprès du premier serveur d'informations (3),
**caractérisé en ce que** le serveur de profils (13) comporte des moyens pour exécuter un procédé selon l'une des revendications 1 à 19.

22. Programme informatique, qui est apte à se dérouler sur un système client-serveur (1a ; 1b), en particulier sur un client (9) et/ou sur un serveur, **caractérisé en ce que** le programme informatique est programmé de manière à mettre en oeuvre un procédé selon l'une des revendications 1 à 19, lorsque le programme informatique est en cours d'exécution sur le système client-serveur (1a ; 1b) ;

23. Programme informatique selon la revendication 22, **caractérisé en ce que** le programme informatique est stocké dans un élément de mémoire, l'élément de mémoire étant conçu sous la forme d'une disquette, d'un disque compact (CD), d'un disque optique numérique (DVD), et/ou d'au moins un espace mémoire associé à au moins une composante du système client-serveur (1a ; 1b).
